Europäisches Patentamt

European Patent Office

Office européen des brevets

(19)

(11) Veröffentlichungsnummer: **0 169 930**
**B1**

(12) # EUROPÄISCHE PATENTSCHRIFT

(45) Veröffentlichungstag der Patentschrift:
**10.06.87**

(21) Anmeldenummer: **84109223.2**

(22) Anmeldetag: **03.08.84**

(51) Int. Cl.⁴: **H 04 N 9/83,** H 04 N 9/79

(54) Videorecorder mit magnetischem bandförmigem Speichermedium.

(43) Veröffentlichungstag der Anmeldung:
**05.02.86 Patentblatt 86/6**

(45) Bekanntmachung des Hinweises auf die Patenterteilung:
**10.06.87 Patentblatt 87/24**

(84) Benannte Vertragsstaaten:
**DE FR GB IT NL**

(56) Entgegenhaltungen:
**IEEE TRANSACTIONS ON CONSUMER ELECTRONICS, Band CE-29, Nr. 3, August 1983, Seiten 172-178, IEEE, New York, US; M. TANABE u.a.: "Triple color signal process IC for VCR"**
**IEEE TRANSACTIONS ON CONSUMER ELECTRONICS, Band CE-26, Nr. 3, August 1980, Seiten 315-321, New York, US; I. NAKAGAWA u.a.: "New chrominance signal processing LSI for home VCR"**
**GRUNDIG TECNISCHE INFORMATIONEN, vol. 30, no. 2, 1983, Seiten 79-81, Regensburg, DE; G. REIME: "Der Chromabaustein der neuen Videorecorder"**

(73) Patentinhaber: **Deutsche ITT Industries GmbH, Hans- Bunte- Strasse 19 Postfach 840, D-7800 Freiburg (DE)**

(72) Erfinder: **Mehrgardt, Sönke, Dr., Häglestrasse 26, D-7801 March- Neuershausen (DE)**
Erfinder: **Flamm, Peter M., Dipl.- Ing., Stefan- Meier- Strasse 167, D-7800 Freiburg i.Br. (DE)**
Erfinder: **Fischer, Thomas, Dr., In der Breite 44, D-7801 Umkirch (DE)**
Erfinder: **Pfeifer, Heinrich, Dipl.- Ing., Vogesenstrasse 4, D-7809 Denzlingen (DE)**

(74) Vertreter: **Morstadt, Volker, Dipl.- Ing., c/o Deutsche ITT Industries GmbH Patent/Lizenzabteilung Postfach 840 Hans- Bunte- Strasse 19, D-7800 Freiburg/Brsg. (DE)**

EP 0 169 930 B1

**0 169 930**

## Beschreibung

Die Erfindung betrifft einen Videorecorder mit magnetischem bandförmigem Speichermedium, bei dem nach Abtrennung des Chromasignals vom demodulierten Farb-Bild-Austast-Synchron-Signal-Gemisch, also vom FBAS-Signal, das Chromasignal auf ein Trägersignal mit gegenüber der Norm-Farbträgerfrequenz niedrigerer Trägerfrequenz umgesetzt, das Bild-Austast-Synchron-Signal-Gemisch, also das BAS-Signal, einer Frequenzmodulation unterzogen und die Summe aus dem trägerfreguenz-erniedrigten Chromasignal und aus dem frequenzmodulierten BAS-Signal mittels eines Kopfsystems im Speichermedium gespeichert und bei Wiedergabe von dort mittels des Kopfsystems wieder abgenommen und dann in das FBAS-Signal rücktransformiert wird, und mit Steuerschaltungen der Motoren des bandförmigen Speichermediums und des Kopfsystems.

In der eben geschilderten Weise sind Videorecorder der drei derzeit üblichen Systeme VHS, Video 2000 und Betamax aufgebaut. Die niedrigen ("untere") Farbträgerfrequenz beträgt für das VHS-System bei der PAL-Norm 627 kHz und bei der NTSC-Norm 629 kHz, wobei die erstere 20 Frequenz das 40,125-fache und die zweite das 40-fache der jeweiligen Horizontal-Ablenkfrequenz von PAL bzw. NTSC ist. Die Verkopplung dieser Trägerfrequenzen mit der jeweiligen Horizontalablenkfrequenz ermöglicht es beim Wiedergabebetrieb, Schwankungen der Geschwindigkeit des bandförmigen Speichermediums so genau zu kompensieren, daß eine phasengenaue Regenerierung der ursprünglichen Farbträgerfrequenz erzielt werden kann.

Es ist somit ersichtlich, daß über die von Fernsehgeräten bekannten Schaltungsanordnungen hinaus in Videorecordern noch weitere Schaltungen erforderlich sind, die bei derzeit üblichen Videorecordern zu einem überwiegenden Teil mittels Einzelbauelementen und nur in geringem Unfang mittels monolithisch integrierter Schaltungen realisiert sind, die ausgewählte Teilfunktionen der Analogsignalverarbeitung übernehmen. Die allgemeine Aufgabe der in den Ansprüchen gekennzeichneten Erfindung besteht darin, den Integrationsgrad, also das Ausmaß der Verwendung monolithisch integrierter Schaltungen, zu erhöhen, wobei ein für alle drei Farbfernsehnormen, also PAL, NTSC und SECAM, geeignetes einheitliches Schaltungskonzept gefunden werden soll, d.h. daß das Schaltungskonzept nur geringfügiger Modifikationen zur Anpassung an die jeweilige Norm bedarf. Insbesondere sollen diese Modifikationen in das Gesamtschaltungskonzept nur geringfügig eingreifen und somit ein für alle drei Farbfernsehnormen optimiertes Schaltungskonzept ergeben.

Der erfindungsgemäßen Lösung dieser Gesamtaufgabe liegt zunächst der Gedanke zugrunde, die beim jeweiligen Videorecorder-System erforderlichen Signalverarbeitungen mittels schneller Digitalschaltungen vorzunehmen, die Ausgangssignale dieser Digitalschaltungen jedoch nicht digital auf dem bandförmigen Speichermedium zu speichern, sondern vor der Speicherung wieder in entsprechende Analogsignale zu wandeln. Nach der Erfindung ist somit ein schneller Analog-Digital-Wandler vorgesehen, dessen Abtastsignal eine für alle drei Farbfernsehnormen einheitliche, konstante Frequenz hat. Der Erfindung liegt der weitere Gedanke zugrunde, im Chromakanal die erwähnte digitale Signalverarbeitung bei einer für alle drei Farbfernsehnormen konstanten Zwischen-Trägerfrequenz vorzunehmen, die eine ganzzahlige Unterharmonische der Abtastsignalfrequenz ist

Durch die Erfindung wird somit erreicht, daß die gesamte Signalverarbeitung sowohl bei Aufnahme, als auch bei Wiedergabebetrieb mittels Digitalschaltungen erfolgt, so daß deren Vorteile zum Tragen kommen und ausgenützt werden können, und daß daher eine wesentliche Steigerung des Integrationsgrads von Videorecordern ermöglicht wird.

Die Erfindung und deren weitere Vorteile werden nun anhand der Figuren der Zeichnung näher erläutert.

Fig. 1 zeigt schematisch als prinzipielles Blockschaltbild die Schaltung eines allgemeinen Ausführungsbeispiels der Erfindung,

Fig. 2 zeigt das Blockschaltbild eines Ausführungsbeispiels für eine Chromaschaltung nach der Erfindung,

Fig. 3 zeigt das Blockschaltbild eines Ausführungsbeispiels für eine BAS-Schaltung nach der Erfindung,

Fig. 4 zeigt das Blockschaltbild eines bevorzugten Ausführungsbeispiels für den nach Fig. 3 benötigten digitalen Frequenzdemodulator,

Fig. 5 zeigt die für die Verarbeitung eines SECAM-Signals erforderlichen, bezüglich Fig. 2 zusätzlichen Teilschaltungen,

Fig. 6 zeigt das Blockschaltbild und die Frequenz-Charakteristik eines bevorzugten ersten Normband-Bandpasses

Fig. 7 zeigt das Blockschaltbild und die Frequenz-Charakteristik eines bevorzugten Formier-Bandpasses,

Fig. 8 zeigt das Blockschaltbild und die Frequenz-Charakteristik eines bevorzugten ersten Interpolators, und

Fig. 9 zeigt das Blockschaltbild eines bevorzugten Sinusgenerators.

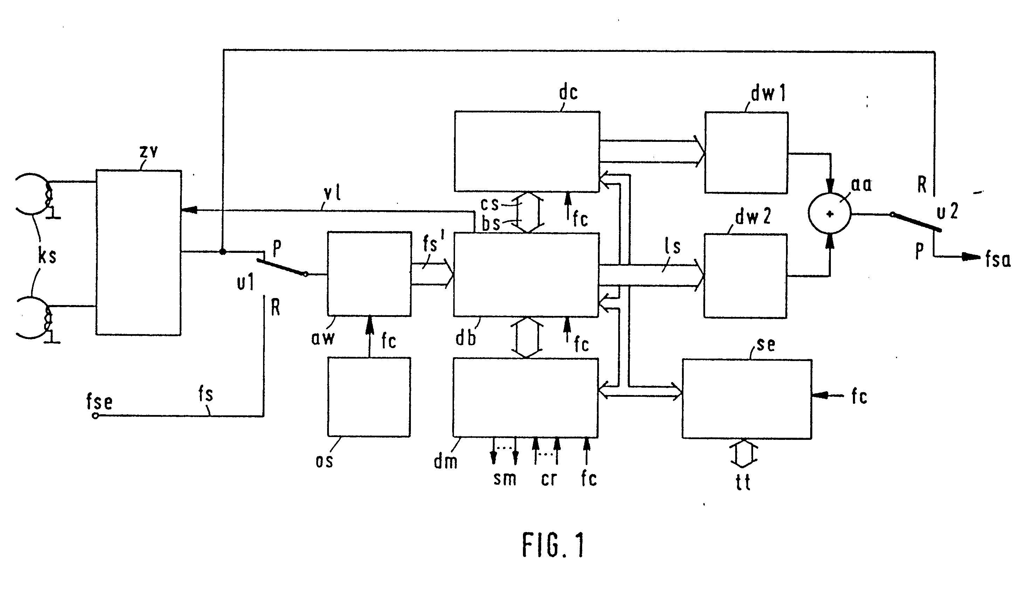

Fig. 1 zeigt ein schematisches Blockschaltbild für ein allgemeines Ausführungsbeispiel der Erfindung. Der Analog-Eingang des schnellen Analog-Digital-Wandlers aw liegt über den ersten Umschalter u1 entweder bei Aufnahmebetrieb R am FBAS-Signaleingang fse oder bei Wiedergabebetrieb P am Ausgang der Zwei-Richtungs-Verstärkeranordnung zv für das Kopfsystem ks, von dem schematisch zwei Köpfe gezeigt sind. Der Analog-Digital-Wandler aw ist, da er ausdrücklicherweise ein schneller sein soll, vorzugsweise ein sogenannter Flash-Wandler, an dessen Ausgang ein entsprechend seinem Auflösungsvermögen mehrstelliges, paralleles Digitalwort im Takt der Frequenz Fc seines Abtastsignals fc auftritt. Dieses erzeugt der Abtastoszillator os, der für alle drei Farbfernsehnormen, PAL, NTSC, SECAM mit fester Frequenz schwingt. Nach einem bevorzugten Ausführungsbeispiel liegt diese Frequenz im Bereich von etwa 18 bis 20 MHz, z.B. bei 18 MHz.

Die erwähnten, am Ausgang des Digitalwandlers aw auftretenden Digitalworte sind bei Aufnahmebetrieb R

2

also das digitalisierte FBAS-Signal fs'. Dieses wird nun in drei miteinander gegenseitig in Datenverkehr stehenden schnellen Digitalschaltungen db, dc, dm x). Die Digitalschaltung db übernimmt dabei im wesentlichen die Verarbeitung des BAS-Signals und die Abtrennung der Synchronsignale vom BAS-Signal, so daß an deren Ausgang schließlich reine digitale Luminanzsignale ls auftreten. Ferner kann mittels der Digitalschaltung db das Chromasignal cs abgetrennt werden, das in der Digitalschaltung dc normgerecht weiterverarbeitet wird. Die Digitalschaltung dm schließlich erzeugt Steuersignale sm für die Motoren von Kopf- bzw. Bandantrieb und erhält ferner entsprechende Korrektursignalecr zugeführt. Die drei schnellen Digitalschaltungen db, dc, dm werden ebenfalls am frequenzkonstanten Abtastsignal fc betrieben.

x) mit mindestens teilweise paralleler Signalverarbeitung aufbereitet.

In Fig. 1 ist ferner gezeigt, daß die am Abtastsignal fc betriebene Steuereinheit se einerseits mit den Bedienelementen tt des Videorecorders in Verbindung steht und andererseits die von dort kommenden Signale bzw. Befehle an die schnellen Digitalschaltungen db, dc, dm weiterleitet.

Am Ausgang der beiden Digitalschaltungen db, dc liegt der erste bzw. zweite Digital-Analog-Wandler dw1, dw2, aus dessen jeweiligem Ausgangssignal mittels des Analog-Addierers aa das erwähnte Analogsignal für die Speicherung auf dem magnetischen Speichermedium erzeugt wird. Sein Ausgang liegt somit über den zweiten Umschalter u2 bei Aufnahmebetrieb R am Verstärker zv, dessen Verstärkungseigenschaften über die Leitung v1 von der Digitalschaltung db in Abhängigkeit von Aufnahme/Wiedergabe steuerbar sind. Bei Wiedergabebetrieb P liegt der Eingang des Analog-Digital-Wandlers aw über den ersten Umschalter u1 am Verstärker zv und der Ausgang des Analog-Addierers aa über den zweiten Umschalter u2 am FBAS-Ausgang fsa.

In Fig. 1 ist durch die zeichnerische Darstellung der Leitungsführungen zwischen Leitungen mit Analogsignalen und solchen mit Digitalsignalen unterschieden. Während erstere als übliche einfache Linien gezeichnet sind, sind letztere streifenartig als Busse ausgeführt, die mindestens aus soviel parallelen Leitungen bestehen, wie die zu verarbeitenden Digitalworte Stellen aufweisen.

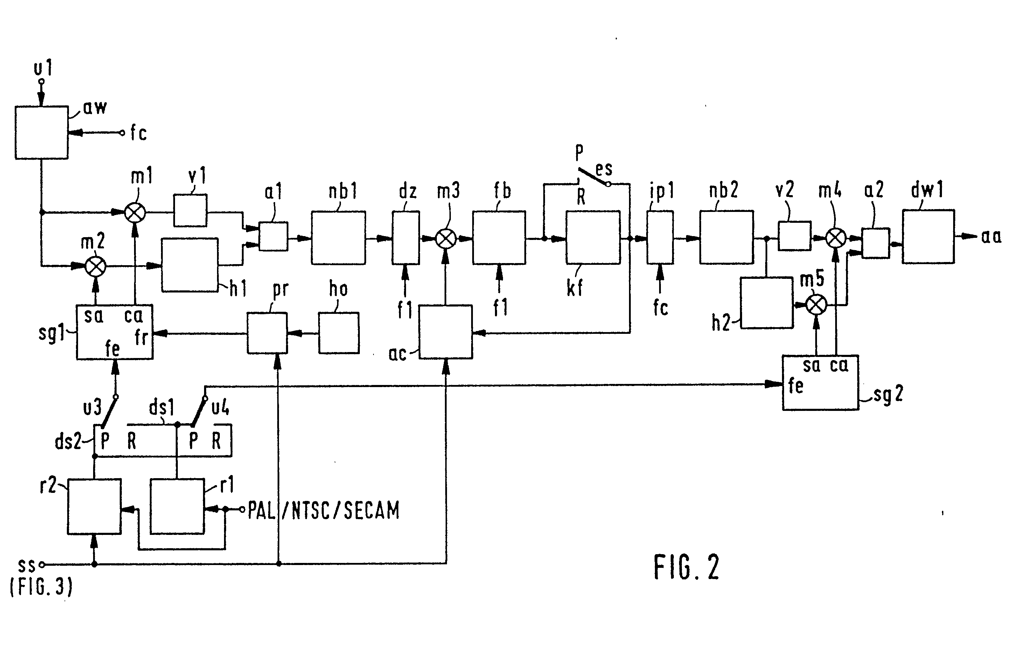

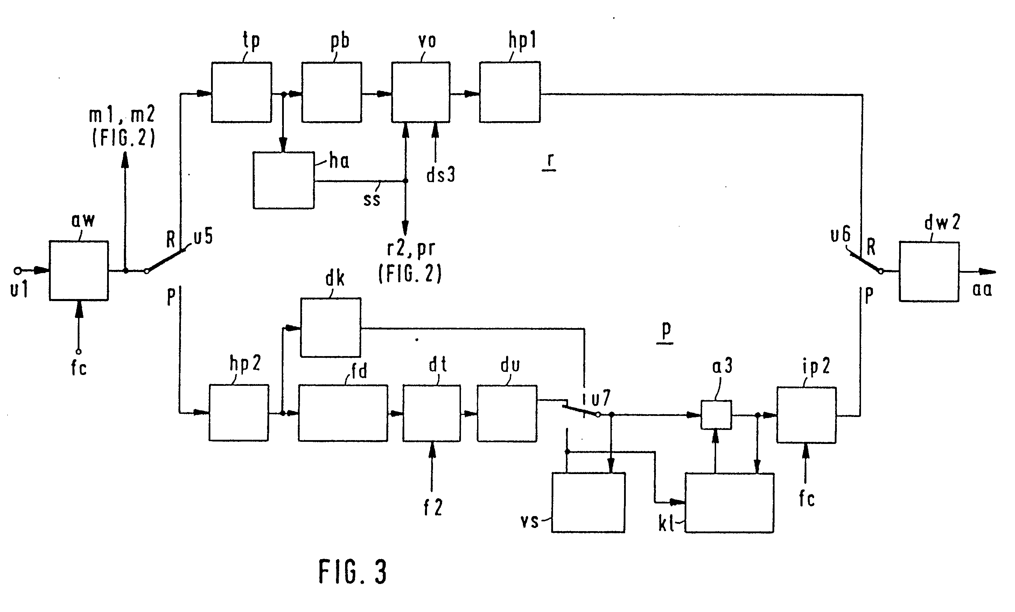

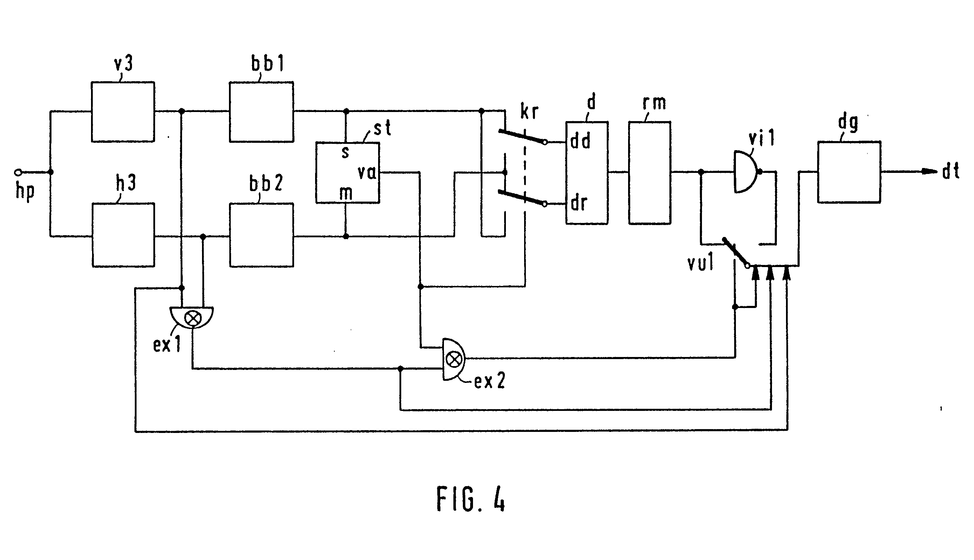

In Fig. 2 ist das Blockschaltbild eines Aufführungsbeispiels für die Chrominanz-Signalverarbeitung gezeigt, wobei der Vollständigkeit halber und zur Verständniserleichterung das Schaltbild signalflußmäßig mit dem Analog-Digital-Wandler aw beginnt, der sein Eingangssignal vom ersten Umschalter u1 zugeführt erhält. Die in Fig. 2 gezeigte Schaltung dient sowohl für Aufnahme- als auch Wiedergabebetrieb, wobei lediglich einzelne Betriebsparameter umgeschaltet werden, jedoch nicht die Signalflußrichtung.

Der Ausgang des Analog-Digitalwandlers aw liegt am jeweils ersten Eingang des ersten und des zweiten digitalen Multiplizierers m1, m2, deren jeweiliger zweiter Eingang mit dem Sinus- bzw. Cosinus-Ausgang sa, ca des ersten digitalen frequenzeinstellbaren und -regelbaren Sinusgenerators sg1 verbunden ist. Der Ausgang des ersten Multiplizierers m1 liegt über das erste digitale Verzögerungsglied v1, dessen Verzögerung gleich der des ersten digitalen 90°-Phasenschiebers h1 ist, am ersten Eingang und der Ausgang des zweiten Multiplizierers m2 liegt über den ersten 90°-Phasenschieber h1 am zweiten Eingang des ersten digitalen Addierers a1. Dem Frequenzeinstelleingang fe des ersten Sinusgenerators sg1 ist für das VHS-System bei Aufnahmebetrieb R das erste Digitalsignal ds1, das der Differenz aus einem Viertel der Abtastsignalfrequenz Fc und der jeweiligen Farbträgerfrequenz gleich ist, bzw. bei Wiedergabe P das zweite Digitalsignal ds2, das der Summe aus einem Viertel der Abtastsignalfrequenz Fc und bei NTSC-Norm dem 40-facher bzw. bei PAL oder SECAM-Norm dem 40,125-fachen der jeweiligen Horizontalfrequenz entspricht, zugeführt. Entsprechend dem in einer der drei Farbfernsehnormen gesendeten Fernsehsignal wird also die zugehörige Farbträgerfrequenz bzw. Horizontalfrequenz in den ersten Sinusgenerator sg1 eingegeben. Dies ist in Fig. 2 durch die beiden Register r1, r2 angedeutet, die die angegebenen Digitalsignale ds1, ds2 enthalten bzw. berechnen und entsprechend der eingestellten Norm abgeben, wie dies durch den mit den drei Normbezeichnungen PAL, NTSC, SECAM markierten Eingang angedeutet ist. Außerdem ist dem zweiten Register r2 noch der Horizontalsynchronimpuls ss zugeführt. Die unterschiedliche Anschaltung der Digitalsignale ds1, ds2 an die Sinusoszillatoren sg1, sg2 bei Aufnahme bzw. Wiedergabe geschieht mittels des dritten und des vierten elektronischen Umschalters u3, u4. Die Digitalsignale ds1, ds2 sind beim Video-2000- bzw. Betamax-System entsprechend der zugehörigen Frequenz des "unteren" Farbhilfsträgers zu wählen.

Die Teilschaltung aus den beiden Multiplizierern m1, m2, dem Verzögerungsglied v1, dem 90°-Phasenschieber h1, dem Addierer a1 und dem digitalen Sinusgenerator sg1 stellt einen digitalen Quadraturmischer dar, mit dem bei allen drei Farbfernsehnormen die Farbträgerfrequenz des FBAS-Signals auf exakt ein Viertel der Abtastfrequenz Fc verschoben wird, welche Frequenz im Ausführungsbeispiel nach Fig. 2 somit die Zwischen-Trägerfrequenz zt ist.

Der Ausgang des Addierers a1 liegt am Eingang des Normband-Bandpasses nb1, dessen Durchlaßbereich entsprechend der jeweiligen Farbfernsehnorm eingestellt ist. Er hat also ebenfalls wie die beiden Register r1, r2 einen entsprechenden Einstelleingang, der jedoch aus Vereinfachungsgründen in der Fig. 2 nicht gezeigt ist. Der Ausgang des Normband-Bandpasses nb1 liegt über den digitalen Dezimierer dz, dessen Abtastsignal-Frequenz F1 gleich einem Drittel der Abtastsignalfrequenz Fc ist, am ersten Eingang des dritten Multiplizierers m3. Dessen Ausgang ist am Eingang des digitalen Formierbandpasses fb angeschlossen, dessen Ausgang über das digitale Kammfilter kf mit dem Eingang des ersten vom Abtastsignal fc getakteten digitalen Interpolators ip1 verbunden ist. Mittels des Schalters es, der bei Aufnahmebetrieb R geschlossen ist, wird erreicht, daß das digitale Kammfilter kf nur während des Wiedergabebetriebs P wirksam ist.

Mittels des Dezimierers dz und des ersten Interpolators ip1 wird für diejenigen Teilschaltungen, die das Chromasignal aufbereiten und verarbeiten, erreicht, daß diese nicht mit der hohen Abtastsignalfrequenz Fc, sondern mit einer günstigeren, tiefer liegenden Taktfrequenz F1 arbeiten können. Dadurch steht für diese Verarbeitung ausreichend Zeit zur Verfügung, und der Speicheraufwand für das Kammfilter kf sinkt erheblich.

Der Ausgang des Interpolators ip1 liegt über den zweiten digitalen Normband-Bandpaß nb2 und das diesem nachgeschaltete zweite digitale Verzögerungsglied v2, dessen Verzögerungszeit gleich der des zweiten 90°-Phasenschiebers h2 ist, am ersten Eingang des vierten digitalen Multiplizierers m4 und über den zweiten Normband-Bandpaß nb2 am Eingang des zweiten 90°-Phasenschiebers h2, dessen Ausgang am ersten Eingang des fünften digitalen Multiplizierers m5 angeschlossen ist. Der jeweils zweite Eingang des vierten bzw. des fünften Multiplizierers m4, m5 liegt am Cosinus- bzw. Sinusausgang ca, sa des zweiten digitalen frequenzeinstellbaren Sinusgenerators sg2, während deren Ausgänge über den zweiten Addierer a2 mit dem Eingang des ersten Digital-Analog-Wandlers dw1 verbunden sind.

Dem Frequenzeinstelleingang fe des zweiten Sinusgenerators sg2 ist bei Aufnahmebetrieb R das oben erwähnte zweite Digitalwort ds2 bzw. bei Wiedergabebetrieb P das oben erwähnte erste Digitalwort ds1 zugeführt. Das Verzögerungsglied v2, der 90°-Phasenschieber h2, die beiden Multiplizierer m4, m5, der Addierer a2 und der Sinusgenerator sg2 bilden ebenfalls wie die hinter dem Analog-Digital-Wandler aw angeordneten entsprechenden Teilschaltungen v1, h1, m1, m2, a1, sg1 einen weiteren Quadraturmischer, welche beiden sich darin voneinander unterscheiden, daß der zuerst erläuterte hinsichtlich seiner einzelnen Teilschaltungen sozusagen spiegelbildlich gegenüber dem zweiten ausgebildet ist, worin ein wesentliches Teilmerkmal der Erfindung zusehen ist. Dadurch vereinfacht sich nämlich die Gesamtschaltung für den Chromakanal ganz wesentlich, da sonst umschaltbare und dadurch komplizierte Filter erforderlich wären. Während also beim einen üblichen Aufbau zeigenden zweiten Quadraturmischer mit den Teilschaltungen v2, h2, m4, m5, a2, sg2 zunächst die beiden zu mischenden und um exakt 90° Phasenverschobenen Signale erzeugt werden, die anschließend mit dem Cosinus- bzw. Sinussignal des Sinusoszillators sg2 gemischt und anschließend addiert werden, ist beim ersten Quadraturmischer mit den Teilschaltungen zunächst die Mischung des Eingangssignals mit dem Sinus- bzw. Cosinussignal des Sinusoszillators vorgenommen und erst anschließend aus dem cosinus-multiplizierten Signal das 90°-phasenverschobene Signal erzeugt.

Außer dem Frequenzeinstelleingang fe weist der erste Sinusgenerator sg1 auch den Phasenregeleingang fr auf, der mit dem Ausgang der digitalen Phasenregelschaltung Pr verbunden ist. Diese vergleicht das digitale Horizontalsynchronsignal ss mit dem Signal des digitalen Horizontaloszillators ho. Der Sinusgenerator sg1 ist somit einem analogen PLL-Oszillator vergleichbar und hat eine Frequenzstabilität, die der eines üblichen Quarzoszillators entspricht.

Der zweite Eingang des dritten Multiplizierers m3 liegt am Ausgang der digitalen automatischen Farbregelstufe ac, deren Signaleingang mit dem Ausgang des Kammfilters kf verbunden ist und deren Takteingang die Synchronimpulse ss zugeführt sind.

Die Farbregelstufe ac regelt die Amplitude des Farb-Burst-Signals auf einen konstanten Wert, um bei Aufnahme das magnetische Speichermedium optimal auszusteuern, bzw. bei Wiedergabe Amplitudenschwankungen, z.B. auf Grund variieren - der Bandeigenschaften, auszugleichen. Ferner sorgt die Farbregelstufe für die normgemäße Amplitudenanhebung und -absenkung des Farb-Burst-Signals selbst.

Bei Aufzeichnungsgeräten werden üblicherweise zwei Köpfe benutzt, die abwechselnd mit dem Speichermedium in Kontakt sind. Vorteilhaft werden dann in der Farbregelstufe ac die Regelgrößen für beide Köpfe getrennt bestimmt, um systematische Differenzen zwischen den beiden Übertragungswegen zu kompensieren. Dazu wird der Farbregelstufe ein weiteres, nicht gezeichnetes Signal zugeführt, das den gerade in Bandkontakt befindlichen Kopf bezeichnet.

Der auf der erniedrigten Abtastfrequenz F1 arbeitende Formierbandpaß fb stellt die genaue, normgemäße Durchlaßkurve im Chromazweig her, weshalb Bandpaß nb1 nur die grobe Vorselektion durchführt und also einfach zu realisieren ist.

Das Kammfilter kf erhöht die Übersprechdämpfung zwischen nebeneinanderliegenden Spuren des Speichermediums bei Wiedergabe unter Ausnutzung der üblichen Phasenfortschaltung des Chromasignals bei Aufnahme. Dabei wird, unterschiedlich je nach Norm, die Phase des Chromasignals zeilenweise in einer solchen Art geändert, daß sich bei Wiedergabe in einem geeigneten Kammfilter die Übersprechkomponenten gerade kompensieren. In Fig. 2 werden diese Phasenänderungen bei Aufnahme durch entsprechende Signale am Frequenzeinstelleingang fe des Sinusgenerators sg2 bewirkt, bzw. bei Wiedergabe am Frequenzeinstelleingang des Sinusgenerators sg1 rückgängig gemacht.

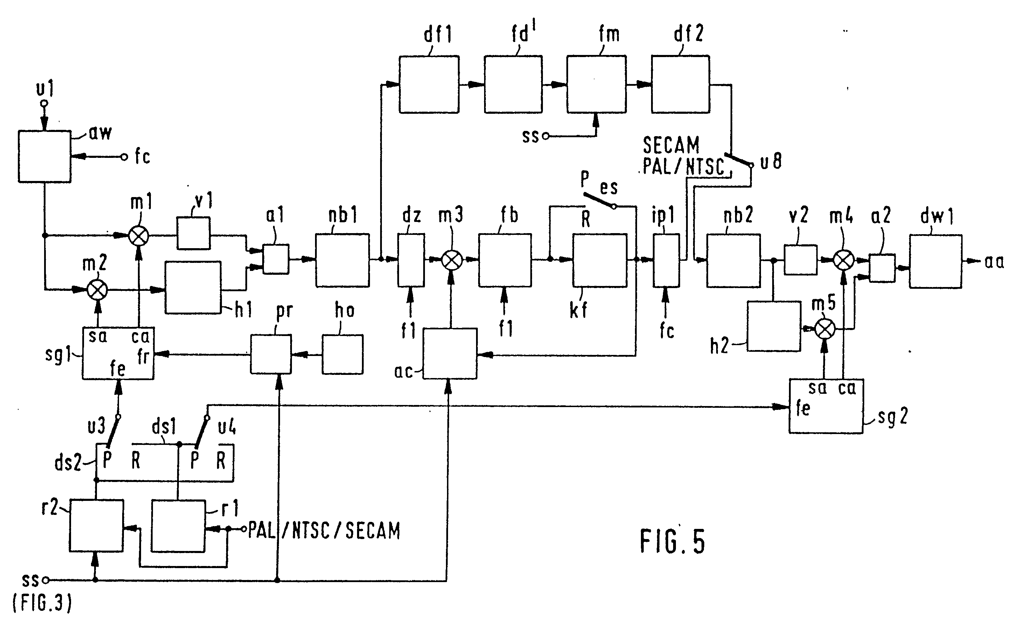

In Fig. 3 ist das Blockschaltbild eines Ausführungsbeispiels für die Verarbeitung des BAS-Signals gezeigt. Anders als bei der Bearbeitung des Chromasignals ist es hier nicht möglich für Aufnahme- bzw. Wiedergabebetrieb mit einem einzigen Kanal auszukommen. Vielmehr dient der erste Teilkanal r dem Aufnahmebetrieb R und der zweite Teilkanal p dem Wiedergabebetrieb P. Es wird wieder mit dem Abtastsignal fc gearbeitet, dessen konstante Frequenz Fc vorzugsweise bei etwa 18 bis 20 MHz liegt, d.h. es wird wieder vom Analog-Digital-Wandler aw ausgegangen. Zusätzlich zu der Ansteuerung der Multiplizierer m1, m2 nach Fig. 2 wird sein Ausgangssignal auch dem fünften elektronischen Umschalter u5 zugeführt, der entsprechend der gewählten Betriebsart R, P entweder den Teilkanal r oder den Teilkanal P signalversorgt.

Im Teilkanal r liegt das Ausgangssignal des Analog-Digital-Wandlers aw am Eingang des Tiefpasses tp, dessen obere Grenzfrequenz bei etwa 3 MHz liegt und dessen Ausgang die digitale Synchronimpulsabtrennstufe ha speist sowie über die digitale Preemphasis- und Begrenzerstufe pb mit dem Eingang des digitalen spannungsgesteuerten Oszillators vo als Frequenzmodulator verbunden ist. Diesem ist das dessen Trägerfrequenz fernsehnorm-abhängig bestimmende dritte Digitalwort ds3 zugeführt. Der Ausgang

4

des Oszillators vo ist über den ersten digitalen Hochpaß hp1, dessen untere Grenzfrequenz bei etwa 1,5 MHz liegt, und über den sechsten elektronischen Umschalter u6 mit dem Eingang des zweiten Digital-Analog-Wandlers dw2 verbunden.

Im zweiten Teilkanal p ist das Ausgangssignal des Analog-Digital-Wandlers aw über den Umschalter u5 dem zweiten digitalen Hochpaß hp2 zugeführt, dessen untere Grenzfrequenz bei etwa 1,5 MHz liegt und dessen Ausgang mit dem Eingang des zweiten Digital-Analog-Wandlers dw2 gekoppelt ist. Diese Kopplung ist beim Ausführungsbeispiel nach Fig. 3 im besonderer Ausgestaltung der Erfindung wie folgt ist mit dem Eingang des digitalen dezimierendem Tiefpasses dt verbunden, dessen obere Grenzfrequenz bei etwa 3 MHz liegt und dem das Taktsignal f2 mit der halben Abtastsignalfrequenz Fc/2 zugeführt ist, so daß die Digitalworte an dessen Ausgang im Takt dieser Taktfrequenz F2 auftreten. Am Ausgang des dezimierenden Tiefpasses dt liegt die digitale Deemphasis- und Rauschunterdrückungsstufe du, deren Ausgang einerseits über die erste Eingangs-Ausgangsstrecke des siebten elektronischen Umschalters u7 mit dem ersten Eingang des dritten Addierers a3 bzw. andererseits über die zweite Eingangs-Ausgangsstrecke des Umschalters u7 am ersten Eingang des digitalen Korrelators kl, dessen zweiter Eingang mit dem Ausgang des dritten Addierers a3 verbunden ist und dessen Ausgang am zweiten Eingang dieses Addierers a3 liegt. Der Ausgang des Umschalters u7 liegt ferner am Eingang der Verzögerungsstufe vs, deren Verzögerungzeit gleich einer Bildzeilendauer des Fernsehsystems ist. Am Ausgang des dritten Addierers a3 liegt der vom Abtastsignal fc getaktete zweite digitale Interpolator ip2, dessen Ausgang über den sechsten elektronischen Umschalter u6 mit dem Eingang des zweiten Digital-Analog-Wandlers dw2 verbunden ist. Der Steuereingang des Umschalters u7 liegt schließlich am Ausgang des Dropout-Detektors dk, dessen Eingang vom Ausgang des zweiten Hochpasses hp2 gespeist ist.

Der Dropout-Detektor dk besteht aus einer Vergleichsschaltung, die bei Unterschreiten eines vorgegebenen Eingangspegels den Umschalter u7 betätigt, so daß an die Stelle des schwachen und folglich stark verrauschten Signales vom Speichermedium das Signal der vorhergehenden Bildzeile von der Verzögerungsstufe vs genommen wird. Ebenfalls zur Rauschunterdrückung dient der Korrelator kl. In dieser üblichen Schaltung wird bei geringer Abweichung der Signale aufeinanderfolgender Bildzeilen durch Filterung Rauschen unterdrückt, während bei größerer Abweichung das Filter abgeschaltet wird ("Bewegungsdetektor"), um einer unerwünschten Beeinträchtigung schneller, vertikaler Bildänderungen zu begegnen.

In Fig. 4 ist das Blockschaltbild einer bevorzugten Ausführungsform für den Frequenzdemodulator fd nach Fig. 3 gezeigt. Sein Eingang liegt über das dritte Verzögerungsglied v3, dessen Verzögerungzeit gleich der des dritten digitalen 90°-Phasenschiebers h3 ist,und den diesem nachgeschalteten ersten digitalen Betragsbildner bb1 am Subtrahend-Eingang s des Subtrahierers st und am ersten Signaleingang des elektronischen Vielfachkreuzschalters kr. Der dritte 90°-Phasenschieber h3 liegt zwischen dem Eingang des Frequenzdemodulators und dem des zweiten digitalen Betragsbildners bb2, dessen Ausgang am Minuend-Eingang m des Subtrahierers st und am zweiten Signaleingang des Vielfachkreuzschalters kr angeschlossen ist. Dessen Steuereingang ist mit dem das Vorzeichensignal führenden Ausgang va des Subtrahierers st verbunden, und seine beiden Signalausgänge liegen am Dividend- bzw. Divisoreingang dd, dr des digitalen Dividierers d, dessen Ausgang mit dem Adresseingang des die Arcus-Tangens-Werte des ersten Halbquadranten enthaltenden Festwertspeichers rm verbunden ist.

Die jeweils höchstwertige Stelle des Ausgangssignals des dritten Verzögerungsglieds v3 bzw. des dritten 90°-Phasenschiebers h3 ist dem ersten bzw. dem zweiten Eingang des ersten Antivalenzglieds ex1 zugeführt, dessen Ausgang am ersten Eingang des zweiten Antivalenzglieds ex2 liegt, an dessen zweitem Eingang der Vorzeichenausgang des Subtrahierers st angeschlossen ist.

Jedem Ausgang des Festwertspeichers rm ist jeweils einer der Inverter des ersten Vielfachinverters vil nachgeschaltet, deren jeweilige Eingänge am jeweiligen ersten Eingang der einzelnen Umschalter des ersten Vielfachumschalters vu1 liegen. Deren jeweilige zweite Eingänge sind mit dem jeweiligen Ausgang des Festwertspeichers rm verbunden, und der gemeinsame Steuereingang der einzelnen Umschalter liegt am Ausgang des zweiten Antivalenzglieds ex2, während dem Ausgang des ersten Vielfachumschalters vu1 das digitale Differenzierglied dg nachgeschaltet ist.

Die Stellen des Ausgangssignals des Vielffachumschalters (vu1) sind auf der höherwertigen Seite durch den Ausgang des zweiten Antivalenzglieds ex2 als nächsthöhere Stelle, den Ausgang des ersten Antivalenzglieds ex1 als zweithöhere und die Vorzeichenstelle des Ausgangssignals des dritten Verzögerungsglieds v3 als höchste Stelle ergänzt. Dem Ausgang des Vielfachumschalters (vu1) ist das digitale Differenzierglied dg nachgeschaltet.

Mittels des Kreuzschalters kr und seiner Steuerung vom Vorzeichenausgang va des Subtrahierers st wird erreicht, daß am Dividend-Eingang dd des Dividierers d immer ein kleineres oder höchstens gleiches Signal als am Divisor-Eingang dr liegt, so daß der Dividierer d eine feste Ausgangsstellenzahl haben kann, was im umgekehrten Fall, wenn man die Division einer größeren Zahl durch eine kleinere zuließe, nicht möglich wäre, da dann das Ergebnis im Grenzfall gleich unendlich werden könnte. Mittels der beiden Betragsbildner bb1, bb2 werden die Ausgangssignale des Verzögerungsglieds v3 und des 90°-Phasenschiebers h3 zunächst von ihrem Vorzeichen befreit, was zusammen mit der eben geschilderten Maßnahme bezüglich des Dividierers d dazu führt, daß im Festwertspeicher rm lediglich diejenigen Arcus-Tangens-Werte enthalten zu sein brauchen, die im ersten Halbquadranten, also zwischen 0° und 45°, liegen. Dadurch wird dieser Festwertspeicher optimal klein.

5

Mittels der beiden Antivalenzglieder ex1, ex2 wird dem Ausgangssignal des Festwertspeichers rm diejenige zusätzliche Stellenzahl mit den zugehörigen Signalen wieder hinzugefügt, die für einen Vollwinkel von 360° erforderlich sind. Am Ausgang des Vielfachumschalters vu1 liegt daher bereits das Phasendemodulierte Signal des frequenzzudemodulierenden Eingangssignals vor, und daraus wird mittels des Differenzierglieds dg das frequenzdemodulierte Signal gewonnen.

Anstatt die beiden um 90° Phasenverschobenen Signale mittels der Teilschaltungen v3, h3 zu erzeugen, können sie auch mittels eines Transversalfilters ungerader Ordnung abgeleitet werden. Die ungerade Ordnung ist wichtig, da derartige Filter in einem Frequenzbereich, der symmetrisch zu einem Viertel der Taktfrequenz des Transversalfilters liegt, einen besonders kleinen Amplitudenfehler ihrer Frequenzcharakteristik haben, wenn der Grad des Filters vorgegeben ist.

Eine Abschätzung des Flächenbedarfs einer monolithisch MOS-integrierten Halbleiterschaltung für einen Frequenzdemodulator nach Fig. 4 ergibt bei einer Stellenzahl am Eingang der Teilschaltungen v3, h3 von acht und einer Stellenzahl hinter dem Kreuzschalter kr von sieben und einer Ausgangsstellenzahl von zehn eine Kristallfläche von etwa 6 mm².

In Fig. 5 ist eine Weiterbildung der Anordnung nach Fig. 2 gezeigt, die für SECAM-Betrieb zusätzliche Teilschaltungen enthält. Im einzelnen ist vorgesehen, daß am Ausgang des ersten Normband-Bandpasses nb1 das erste Digitalfilter df1 angeordnet ist, dessen Filtercharakteristik von glockenförmig bei Aufnahmebetrieb auf invers-glockenförmig bei Wiedergabe umschaltbar ist, welche Umschaltung der Einfachheit halber in Fig. 5 wiederum nicht gezeigt ist. Am Ausgang des ersten Digitalfilters df1 ist der weitere digitale Frequenzdemodulator fd' angeschlossen, der vom digitalen Frequenzmodulator fm gefolgt wird, dessen Hub von einem ersten Wert bei Aufnahmebetrieb auf einen zweiten Wert bei Wiedergabe umschaltbar ist und der mittels des Horizontal-Synchronimpulses ss nur während der Zeiten mit einem Chromasignal wirksam geschaltet ist. Auf den Frequenzmodulator fm folgt das zweite Digitalfilter df2, dessen Filtercharakteristik von glockenförmig bei Wiedergabe auf invers-glockenförmige bei Aufnahmebetrieb umschaltbar ist (Umschaltbarkeit wiederum nicht gezeichnet) und dessen Ausgang nur bei SECAM-Betrieb über die erste Eingangs-Ausgangsstrecke des achten elektronischen Umschalters u8 mit dem Eingang des zweiten Normband-Bandpasses nb2 verbunden ist. Bei PAL/NTSC-Betrieb verbindet dagegen die zweite Ausgangsstrecke des Umschalters u8 den Ausgang des ersten Interpolators ip1 mit dem Eingang des zweiten Normband-Bandpasses nb2.

Bei SECAM-Betrieb sind also anstatt der Teilschaltungen dz, m3, fb, kf, ip1 die eben erwähnten Teilschaltungen df1, fd', fm, df2 in Funktion. Im übrigen enthält das Schaltbild nach Fig. 5 die gleichen Teilschaltungen wie Fig. 2.

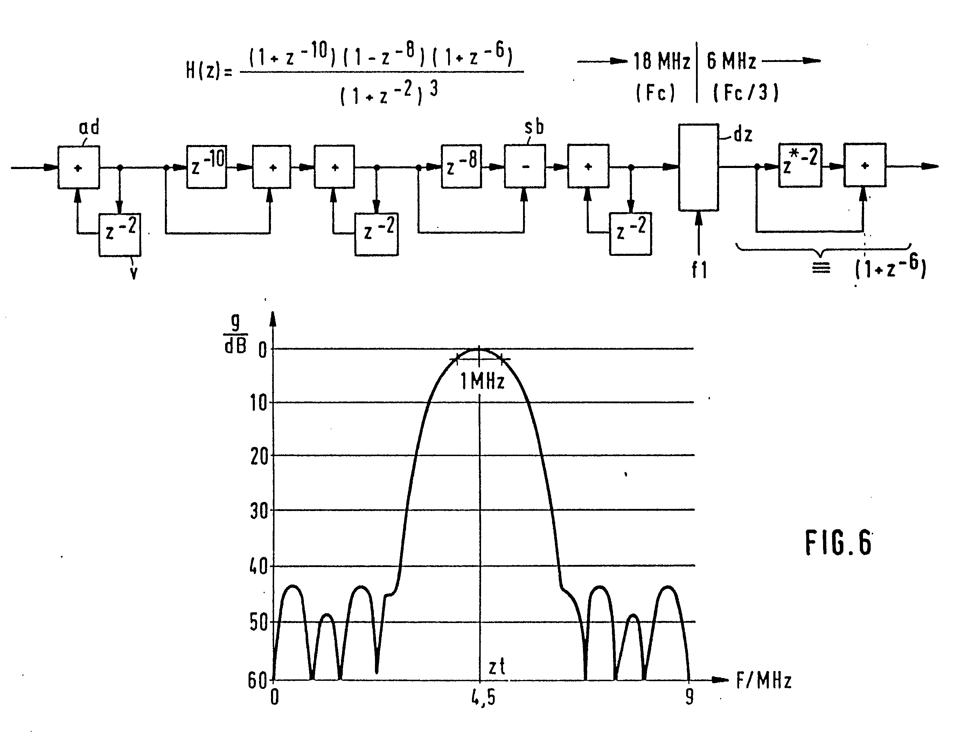

Die Fig. 6 zeigt das Blockschaltbild und die Frequenzcharakteristik für die bevorzugte Dimensionierung des ersten Normband-Bandpasses nb1. Von möglichen Digitalfiltern für diesen Bandpaß hat das in Fig. 6 gezeigte Digitalfilter im Hinblick auf die Anzahl der verwendeten Additionsstufen ad und Subtraktionsstufen sb eine recht günstige Struktur. Seine Übertragungsfunktion H(z) ist die folgende:

$$H(z) = \frac{(1 + z^{-6})(1 - z^{-4})(1 + z^{-4})}{(1 + z^{-2})^2}$$

Wie ersichtlich setzt sich das Digitalfilter nach Fig. 6 aus den bereits erwähnten Additionsstufen ad, der Subtraktionsstufe sb und Verzögerern v zusammen, deren Verzögerungszeit einem Vielfachen der Periodendauer des Abtastsignals des Filters entspricht, wobei dieses Vielfache jeweils der positiv genommenen Zahl im Exponenten der Basis z entspricht.

Wie aus dem Blockschaltbild der Fig. 6 ferner hervorgeht, ist der Term $(1 + z^{-6})$ dadurch realisiert, daß der zugehörige Schaltungsteil signalflußmäßig hinter dem Dezimierer dz angeordnet ist, dessen Abtastsignal f1 eine Frequenz F1 gleich einem Drittel der Frequenz Fc des Abtastsignals fc ist. Bei einer Frequenz Fc von 18 MHz ist demzufolge dieser Schaltungsteil mit einer Frequenz Fc/3 von 6 MHz betrieben. Das Verzögerungsglied des hinter dem Dezimierer dz angeordneten Schaltungsteils mit dem Symbol z* und dem Exponenten -2 hat nach der vorherigen Definition somit eine Verzögerungszeit von 2Fc/3 was gleich 6Fc ist.

Die in Fig. 6 gezeigte Frequenzcharakteristik gibt die normierte Dämpfung g im Dämpfungsmaß dB über der Frequenz F in MHz an. Das Maximum der Kurve liegt bei 4,5 MHz entsprechend der oben erwähnten Zwischen-Trägerfrequenz zt.

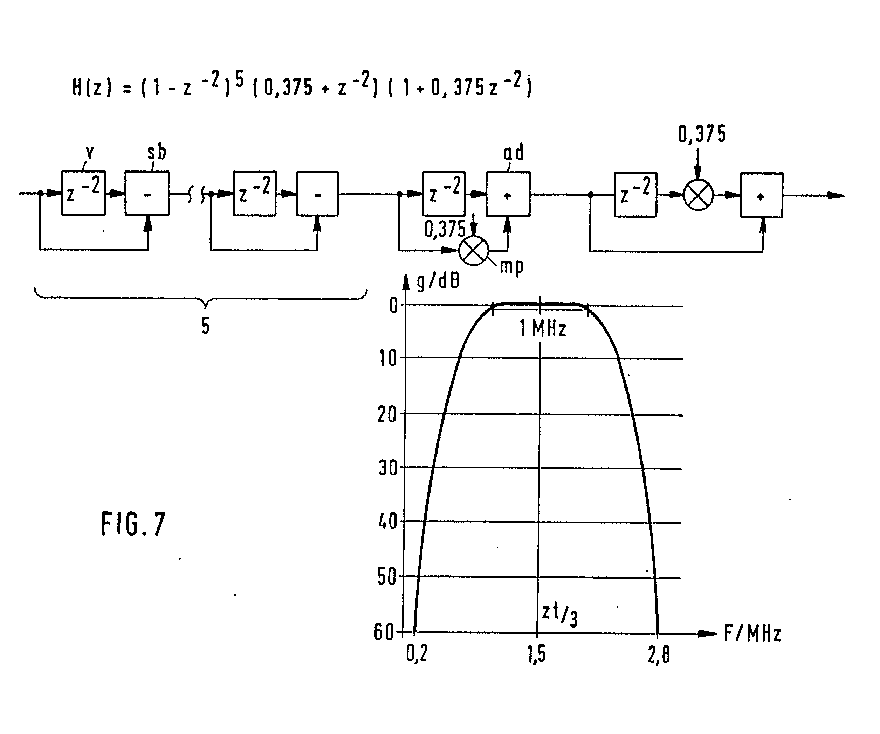

In Fig. 7 sind das Blockschaltbild und die Frequenzcharakteristik für die bevorzugte Dimensionierung des Formier-Bandpasses fb nach Fig. 2 oder 5 gezeigt. Dieses Digitalfilter hat zusätzlich zu den bereits erwähnten Grundeinheiten ad, sb, v noch Multiplizierstufen mp, die den konstanten dezimalen Faktor 0,375 der Übertragungsfunktion H(z) wirksam werden lassen. Diese lautet wie folgt:

$$H(z) = (1 - z^{-2})^5 (0,375 + z^{-2})(1 + 0,375z^{-2}).$$

Dieses Digitalfilter hat wiederum bezüglich der Anzahl von Additions- und Subtraktionsstufen eine günstige Struktur. Seine Filtercharakteristik liegt symmetrisch zu 1,5 MHz, was sich daraus ergibt, daß dieses Filter mit dem Abtastsignal f1 der Frequenz Fc/3 getaktet ist und somit die Zwischen-Trägerfrequenz von 4,5 MHz ebenfalls auf ein Drittel verschoben wird.

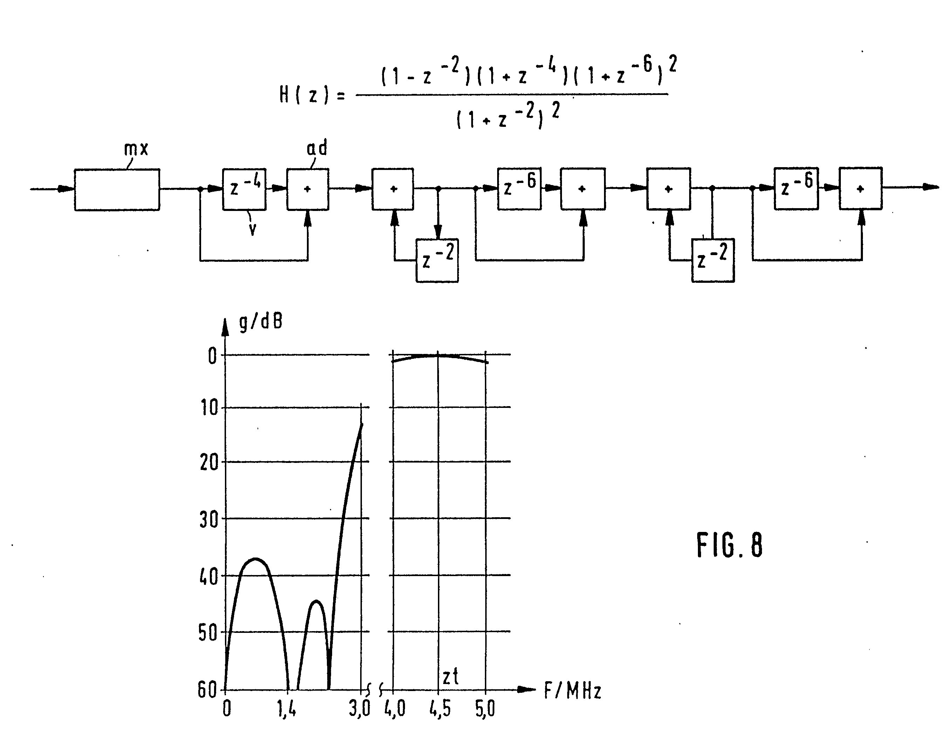

In Fig. 8 sind das Blockschaltbild und die Frequenzcharakteristik für die bevorzugte Dimensionierung des ersten Interpolators ip1 mit zugehöriger Übertragungsfunktion H(z) gezeigt, die wie folgt lautet:

$$H(z) = \frac{(1 - z^{-2})(1 + z^{-4})(1 + z^{-4})^2}{(1 + z^{-2})^2}$$

Am Eingang des Digitalfilters nach Fig. 8 ist der digitale Multiplexer mx angeordnet, der aus jedem Eingangs-Digitalwort e die Dreierfolge e, 0, -e erzeugt. Diese Dreierfolge entspricht der Realisierung des Terms $(1 - z^{-2})$.

Die zeichnerische Darstellung der Frequenzcharakteristik des Digitalfilters nach Fig. 8 ist zwischen 3,0 MHz und 4,0 MHz unterbrochen, bzw. komprimiert. Dieses Digitalfilter ist mit dem Abtastsignal fc getaktet, so daß das Dämpfungsminimum (0 dB) bei 4,5 MHz liegt, wenn wieder von einer Abtastfrequenz Fc von 18 MHz ausgegangen wird.

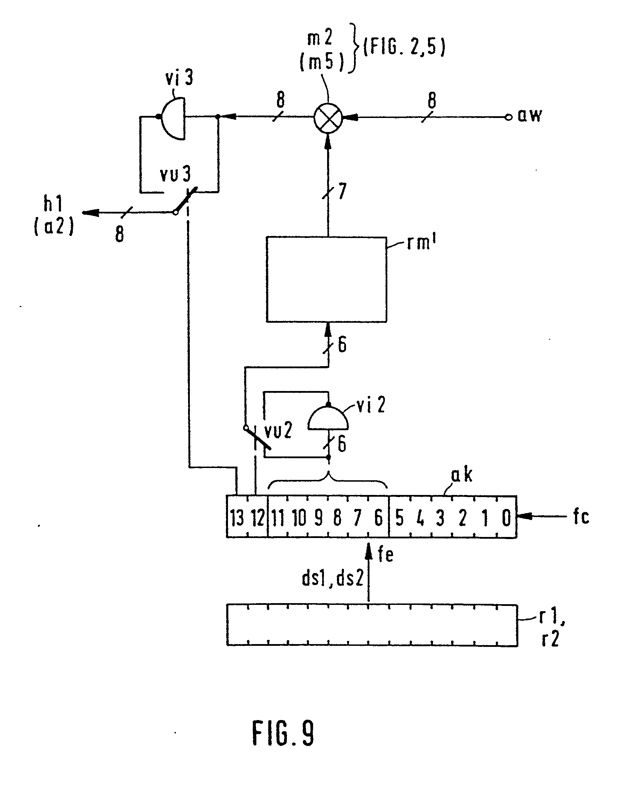

Die Fig. 9 zeigt das Blockschaltbild für eine bevorzugte Ausführungsform der beiden Sinusgeneratoren sg1, sg2 mit Multiplizierer m2 bzw. m5 zum Mischen nach Fig. 2. Ein derartiger Generator enthält den j-stelligen digitalen Akkumulator ak, wobei in Fig. 9 j = 14 ist. Akkumulatoren sind bekanntlich getaktet aufsummierende Schaltungen, die bei jedem Taktimpuls zum Ergebnis des vorhergehenden Taktimpulses dieselbe Zahl hinzuaddieren. Am Frequenzeinstelleingang fe liegt somit eines der beiden Digitalworte ds1, ds2 aus einem der beiden Register r1, r2 nach Fig. 2 oder 5. Dem Akkumulator ak ist das Abtastsignal fc als Taktsignal zugeführt.

In Richtung niederwertiger Stellen sind, ausgehend von der (j-2)-ten Stelle, q Stellen des Ausgangssignals des Akkumulators ak, wobei q kleiner oder gleich j-2 ist, über jeweils die einzelnen Inverter des zweiten Vielfachinverters vi2 geführt. Im Ausführungsbeispiel der Fig. 9 ist q = 6, und somit sind die Stellen mit der Wertigkeit $2^6$ bis $2^{11}$ erfaßt (es ist vorausgesetzt, daß im natürlichen Dualcode gearbeitet wird).

Der jeweilige Eingang der einzelnen Inverter liegt am jeweiligen ersten Eingang der einzelnen Umschalter des zweiten Vielfachumschalters vu2, während deren jeweiliger zweiter Eingang mit dem jeweiligen Ausgang für die q Stellen verbunden ist und der gemeinsame Steuereingang der einzelnen Umschalter am Ausgang der (j-1)-ten Stelle liegt. Der Ausgang des zweiten Vielfachumschalters vu2 ist mit dem Adreßeingang des die Sinus-Werte des ersten Quadranten enthaltenden weiteren Festwertspeichers rm' verbunden, dessen Ausgang am ersten Eingang eines der Multiplizierer m2, m5 liegt. Sein zweiter Eingang ist der Signaleingang, und mit seinem Ausgang ist jeweils einer der Inverter des dritten Vielfachinverters vi3 verbunden, deren jeweilige Eingänge am jeweiligen ersten Eingang der einzelnen Umschalter des dritten Vielfachumschalters vu3 liegen, während deren jeweiliger zweiter Eingang mit dem Ausgang des Multiplizierers m2 bzw. m5 verbunden ist. Der gemeinsame Steuereingang der einzelnen Umschalter des dritten Vielfachumschalters vu3 liegt am Ausgang der j-ten Stelle des Akkumulators ak, und der Ausgang des dritten Vielfachumschalters vu3 liefert das mit dem Sinussignal multiplizierte Eingangssignal.

Mittels der beiden Vielfachinverter vi2, vi3 und der beiden Vielfachumschalter vu2, vu3 lassen sich auch die Sinuswerte des zweiten bis vierten Quadranten mittels der im Festwertspeicher rm' enthaltenen Sinuswerte des ersten Quadranten erzeugen. Auf in Fig. 9 nicht gezeigte, jedoch ähnliche und analoge Weise lassen sich die Cosinuswerte am jeweiligen Cosinusausgang ca der Sinusgeneratoren sg1, sg2 erzeugen. Dafür können beispielsweise ein weiterer Festwertspeicher sowie weitere zwei Vielfachinverter und weitere zwei Vielfachumschalter vorgesehen werden. Es ist jedoch auch möglich, die Gesetzmäßigkeit zwischen Sinus- und Cosinusfunktion auszunutzen, daß nämlich die eine durch eine 90°-Phasenverschiebung aus der anderen hervorgeht, so daß nur der weitere Festwertspeicher rm' nach Fig. 9 mit den Sinuswerten des ersten Quadranten erforderlich ist.

In den Figuren 2 bis 9 sind sämtliche Verbindungen zwischen den einzelnen Teilschaltungen als einfache Leitungen gezeichnet. Dies ist allein aus zeichnerischen Gründen erfolgt, um die Figuren nicht durch die eigentlich zu zeichnenden, Busse repräsentierenden bandförmigen Leitungen unübersichtlich zu machen. Da es sich nach dem der Erfindung zugrundeliegenden Prinzip bei den in den Figuren 2 bis 9 enthaltenen Teilschaltungen um Digitalsignale verarbeitende Schaltungen handelt und diese in paralleler Form zu verarbeiten sind, sind die Verbindungsleitungen der einzelnen Teilschaltungen durchweg als Busse zu denken. Dies gilt mit wenigen Ausnahmen, die z.B. die Steuerleitungen für die verschiedenen Umschalter und Vielfachumschalter betreffen. In Fig. 9 ist die Leitungsanzahl der Busse durch die Zahl an den schrägen Stücken beispielsweise angegeben.

Die Erfindung läßt sich mittels monolithisch integrierter Schaltungen, wie eingangs bereits erwähnt wurde, realisieren, wobei die Gesamtschaltung im Bedarfsfall einer einzigen monolithisch integrierten Schaltung zugeordnet oder auf mehrere aufgeteilt werden kann. Da es sich bei den einzelnen Teilschaltungen durchweg um Digitalschaltungen handelt, ist die Realisierung mittels Isolierschicht-Feldeffekttransistoren, also in der sogenannten MOS-Technik, besonders günstig, jedoch können auch schnelle bipolare Digitalschaltungstechniken zur Realisierung geeignet sein.

Das im Chromakanal angewendete Prinzip, mittels Quadraturmischung die digitale Verarbeitung auf eine Subharmonische der Taktfrequenz unabhängig von der normabhängigen Farbträgerfrequenz zu verschieben und dadurch mit fester Abtastfrequenz bei allen Farbfernsehnormen arbeiten zu können, hat den großen Vorteil, nur einen einzigen Taktgenerator mit fester Frequenz für das Abtastsignal vorsehen zu müssen. Da dieser üblicherweise ein Quarzoszillator ist, ist auch nur ein einziger Quarz erforderlich, während bei einer "Anbindung" seiner Frequenz an die normabhängige vierfache Farbträgerfrequenz drei Quarzoszillatoren (je einer für PAL, NTSC, SECAM) oder ein Oszillator mit umschaltbaren drei Quarzen erforderlich wäre. Die Anwendung dieses Prinzips ist daher nicht auf Videorecorder beschränkt, sondern es kann überall dort mit Erfolg benutzt werden, wo Farbfernsehsignale mehrerer Normen digitalisiert verarbeitet werden sollen.

**Patentansprüche**

1. Videorecorder mit magnetischem bandförmigem Speichermedium, bei dem nach Abtrennung des Chromasignals (cs) vom demodulierten Farb-Bild-Austast-Synchron-Signal-Gemisch ( = FBAS-Signal) (fs) das

7

Chromasignal (cs) auf ein Trägersignal mit gegenüber der Norm-Farbträgerfrequenz niedrigerer Farbträgerfreqvenz umgesetzt, das Bild-Austast-Synchron-Signal-Gemisch (= BAS-Signal) (bs) einer Frequenzmodulation unterzogen und die Summe aus dem trägerfrequenz-erniedrigten Chromasignal (cs') und aus dem frequenzmodulierten BAS-Signal (bs') mittels eines Kopfsystems (ks) im Speichermedium gespeichert und bei Wiedergabe (P) von dort mittels des Kopfsystems (ks) wieder abgenommen und dann in das FBAS-Signal (fs) rücktransformiert wird, und mit Steuerschaltungen (dm) der Motorer des bandförmigen Speichermediums und des Kopfsystems (ks) gekennzeichnet durch folgende Merkmale:

- entweder mit dem FBAS-Signal-Eingang (fse) oder dem Kopfsystem (ks) ist uber einen ersten elektronischen Umschalter (u1) ein schneller Analog-Digital-Wandler (aw) verbunden, und ihm ist ein für alle drei Farbfernsehnormen (PAL, NTSC, SECAM) frequenzkonstantes Abtastsignal (fc) zugeführt,

- die Auftrennung in Chroma- und BAS-Signal (cs, bs) sowie deren entsprechend digitale Aufbereitung zu einem digitalen Chroma- und einem digitalen BAS-Signal, die Abtrennung der Synchronsignale vom BAS-Signal (bs) sowie deren digitale Aufbereitung zu digitalen Synchronsignalen (ss) und die Erzeugung digitaler Motorensteuersignale (sm) erfolgt mittels schneller Digitalschaltungen (db, dc, dm) mit mindestens teilweiser paralleler Signalverarbeitung - die digitale Signalverarbeitung des Chromasignals (cs) erfolgt bei einer für alle drei Farbfernsehnormen einheitlichen konstanten, in der Nähe der normüblichen Farbträgerfrequenz liegenden Zwischen-Trägerfrequenz (zt), wovon die Frequenz (Fc) des Abtastsignals (fc) ein ganzzahliges Vielfaches ist,

- das aufbereitete digitale Chromasignal (cs) bzw. das aufbereitete digitale BAS-Signal (1s) ist einem ersten bzw. einem zweiten Digital-Analog-Wandler (dw1, dw2) zugeführt, deren jeweiliger Ausgang mit jeweils einem Eingang eines Analogaddierers (aa) verbunden ist, und

- sein Ausgang liegt über einen zweiten elektronischen Umschalter (u2) am FBAS-Signal-Ausgang (fsa) des Videorecorders oder ist darüber mit dem Kopfsystem (ks) gekoppelt.

2. Videorecorder nach Anspruch 1 mit einer durch folgende Merkmale gekennzeichneten digitalen Chromaschaltung (dc):

- es ist ein für Aufnahme- bzw. Wiedergabebetrieb (R, P) gemeinsamer Kanal vorgesehen,

- die konstante Frequenz des Abtastsignals (fc) liegt im Bereich von etwa 18 bis 20 MHz, vorzugsweise bei 18 MHz,

- der Ausgang des Analog-Digital-Wandlers (aw) liegt am jeweils ersten Eingang eines ersten und eines zweiten digitalen Multiplizierers (m1, m2), deren jeweiliger zweiter Eingang mit dem Sinus- bzw. Cosinus-Ausgang (sa, ca) eines ersten digitalen frequenzeinstellbaren und -regelbaren Sinusgenerators (sg1) verbunden ist,

- der Ausgang des ersten Multiplizierers (m1) liegt über ein erstes digitales Verzögerungsglied (v1), dessen Verzögerungszeit gleich der eines ersten digitalen 90°-Phasenschiebers (h1) ist, am ersten Eingang und der Ausgang des zweiten Multiplizierers (m2) liegt über den ersten 90°-Phasenschieber (h1) am zweiten Eingang eines ersten digitalen Addierers (a1), dessen Ausgang über einen ersten digitalen Normband-Bandpaß (nb1) und einen digitalen Dezimierer (dz), dessen Abtastsignal-Frequenz (F1) eine Subharmonische, vorzugsweise gleich einem Drittel, der Abtastsignal-Frequenz (Fc) ist, mit dem ersten Eingang eines dritten digitalen Multiplizierers (m3) verbunden ist,

- der Ausgang des dritten Multiplizierers (m3) liegt am Eingang eines digitalen Formier-Bandpasses (fb), dessen Ausgang über ein digitales Kammfilter (kf), das nur während Wiedergabebetrieb (P) von einem elektronischen Schalter (es) überbrückt ist, mit dem Eingang eines vom Abtastsignal (fc) getakteten ersten digitalen Interpolators (ip1) verbunden ist,

- sein Ausgang liegt über einem zweiten digitalen Normband-Bandpaß (nb2) und ein diesem nachgeschaltetes zweites digitales Verzögerungsglied (v2), dessen Verzögerungszeit gleich der eines zweiten 90°-Phasenschiebers (h2) ist, am ersten Eingang eines vierten digitalen Multiplizierers (m4) und über den zweiten Normband-Bandpaß (nb2) am Eingang des zweiten 90°-Phasenschiebers (h2), dessen Ausgang am ersten Eingang eines fünften digitalen Multiplizierers (m5) angeschlossen ist,

- der jeweils zweite Eingang des vierten bzw. des fünften Multiplizierers (m4, m5) liegt am Cosinus- bzw. Sinus-Ausgang (ca, sa) eines zweiten digitalen frequenzeinstellbaren Sinusgenerators (sg2),

- der jeweilige Ausgang des vierten bzw. des fünften Multiplizierers (m4, m5) liegt an jeweils einem Eingang eines zweiten digitalen Addierers (a2), dessen Ausgang mit dem Eingang des ersten Digital-Analog-Wandlers (dw1) verbunden ist,

- der zweite Eingang des dritten Multiplizierers (m3) liegt am Ausgang einer digitalen automatischen Farbregelstufe (ac), deren Signaleingang mit dem Ausgang des Kammfilters (kf) verbunden ist und deren Takteingang die Synchronimpulse (ss) zugeführt sind,

- dem Frequenzeinstelleingang (fe) des ersten Sinusgenerators (sg1) ist für das VHS-System bei Aufnahmebetrieb (R) ein erstes Digitalsignal (ds1), das der Differenz aus einem Viertel der Abtastsignalfrequenz (Fc) und der jeweiligen Farbträgerfrequenz entspricht, bzw. bei Wiedergabe (P) ein zweites Digitalsignal (ds2), das der Summe aus einem Viertel der Abtastsignalfrequenz (Fc) und bei NTSC-Norm dem 40-fachen bzw. bei PAL- oder SECAM-Norm dem 40,125-fachen der zugehörigen Horizontalfrequenz entspricht, zugeführt,

- dem Phasenregeleingang (fr) des ersten Sinusgenerators (sg1) ist ein Phasenregelsignal einer digitalen Phasenregelschaltung (pr) zugeführt, die das digitale Synchronsignal (ss) mit dem Signal eines digitalen Horizontaloszillators (ho) vergleicht, und

- dem Frequenzeinstelleingang (fe) des zweiten Sinusgenerators (sg2) ist bei Aufnahmebetrieb (R) das zweite bzw. bei Wiedergabe (P) das erste Digitalsignal (ds2, ds1) zugeführt.

3. Videorecorder nach Anspruch 1 mit einer durch folgende Merkmale gekennzeichneten digitalen BAS-Schaltung (db):

- es ist ein erster Teilkanal (r) für Aufnahmebetrieb (R) und ein zweiter Teilkanal (p) für Wiedergabebetrieb (P) vorgesehen,
- die konstante Frequenz des Abtastsignals (fc) liegt bei etwa 18 MHz bis 20 MHz, vorzugsweise bei 18 MHz,
- im ersten Teilkanal (r) ist bei Aufnahme (R)
- der Ausgang des Analog-Digital-Wandlers (aw) mit einem digitalen Tiefpaß (tp) verbunden, dessen obere Grenzfrequenz bei etwa 3 MHz liegt und dessen Ausgang eine digitale Synchronimpulsabtrennstufe (ha) speist und über eine digitale Deemphasis- und Begrenzerstufe (pb) mit dem Eingang eines digitalen spannungsgesteuerten Oszillators (vo) als Frequenzmodulator verbunden ist, dem ein dessen Trägerfrequenz fernsehnormabhängig bestimmendes drittes Digitalwort (ds3) zugeführt ist, und
- der Ausgang des Oszillators (vo) über einen ersten digitalen Hochpaß (hp1), dessen untere Grenzfrequenz bei etwa 1,5 MHz liegt, mit dem Eingang des zweiten Digital-Analog-Wandlers (dw2) verbunden, und
- im zweiten Teilkanal (p) ist bei Wiedergabe (P)
- der Ausgang des Analog-Digital-Wandlers (aw) über einen zweiten digitalen Hochpaß (hp2), dessen untere Grenzfrequenz bei etwa 1,5 MHz liegt, mit dem Eingang eines digitalen Frequenzdemodulators (fd) verbunden, dessen Ausgang mit dem Eingang des zweiten Digital-Analog-Wandlers (dw2) gekoppelt ist.

4. Videorecorder nach Anspruch 3, gekennzeichnet durch folgende Merkmale:.
- zwischen dem Ausgang des Frequenzdemodulators (fd) und dem Eingang des zweiten Digital-Analog-Wandlers (dw2) sind in Signalflußrichtung folgende zusätzliche Teilschaltungen angeordnet:
- ein digitaler dezimierender Tiefpaß (dt), dessen obere Grenzfrequenz bei etwa 3 MHz liegt und dem ein Taktsignal (f2) mit der halben Abtastsignalfrequenz (fc/2) zugeführt ist,
- eine digitale Deemphasis- und Rauschunterdrückungsstufe (du),
- die erste Eingangs-Ausgangs-Strecke eines siebten elektronischen Umschalters (u7),
- der erste Eingangs-Ausgangs-Teil eines dritten digitalen Addierers (a3) und
- ein zweiter vom Abtastsignal (fc) getakteter zweiter digitaler Interpolator (ip2),
- der Ausgang des zweiten Hochpasses (hp2) liegt über einen Dropout-Detektor (dk) am Steuereingang des siebten Umschalters (u7), dessen Ausgang am Eingang einer Verzögerungsstufe (vs) mit einer Verzögerung gleich einer Bildzeilendauer liegt, und
- der Ausgang der Verzögerungsstufe (vs) liegt am zweiten Eingang des siebten Umschalters (u7) und am ersten Eingang eines digitalen Korrelators (k1), dessen zweiter Eingang mit dem Ausgang des dritten Addierers (a3) verbunden ist und dessen Ausgang am zweiten Eingang des dritten Addierers (a3) liegt.

5. Videorecorder nach Anspruch 3 oder 4, gekennzeichnet durch folgenden Aufbau des digitalen Frequenzdemodulators (fd):
- sein Eingang liegt über ein drittes Verzögerungsglied (v3), dessen Verzögerungszeit gleich der eines dritten digitalen 90°-Phasenschieber (h3) ist, und einen diesem nachgeschalteten ersten digitalen Betragsbildner (bb1) am Subtrahend-Eingang (s) eines Subtrahierers (st) und am ersten Signaleingang eines elektronischen Vielfachkreuzschalters (kr),
- der dritte 90°-Phasenschieber (h3) liegt zwischen dem Eingang des Frequenzdemodulators (fd) und dem eines zweiten digitalen Betragsbildners (bb2), dessen Ausgang am Minuend-Eingang (m) des Subtrahierers (st) und am zweiten Signaleingang des Vielfachkreuzschalters (kr) angeschlossen ist,
- sein Steuereingang ist mit dem das Vorzeichensignal führenden Ausgang (va) des Subtrahierers (st) verbunden, und seine beiden Signalausgänge liegen am Dividend- bzw. Divisor-Eingang (dd, dr) eines digitalen Dividierers (d), dessen Ausgang mit dem Adreßeingang eines die Arcus-Tangens-Werte des ersten Halbquadranten enthaltenden Festwertspeichers (rm) verbunden ist,
- die jeweils höchstwertige Stelle des Ausgangssignals des dritten Verzögerungsglieds (v3) bzw. des dritten 90°-Phasenschiebers (h3) ist dem ersten bzw. dem zweiten Eingang eines ersten Antivalenzglieds (ex1) zugeführt, dessen Ausgang am ersten Eingang eines zweiten Antivalenzglieds (ex2) liegt, an dessen zweitem Eingang der Vorzeichenausgang des Subtrahierers (st) angeschlossen ist,
- jeder Stelle des Ausgangs des Festwertspeichers (rm) ist jeweils einer der Inverter eines ersten Vielfachinverters (vi1) nachgeschaltet, deren jeweilige Eingänge am jeweiligen ersten Eingang der einzelnen Umschalter eines ersten Vielfachumschalters (vu1) liegen, während deren jeweilige zweite Eingänge mit dem jeweiligen Ausgang des Festwertspeichers (rm) verbunden sind und der gemeinsame Steuereingang der einzelnen Umschalter am Ausgang des zweiten Antivalenzglieds (ex2) liegt,
- die Stellen des Ausgangssignals des Vielfachumschalters (vu1) sind auf der höherwertigen Seite durch den Ausgang des zweiten Antivalenzglieds (ex2) als nächsthöhere Stelle, den Ausgang des ersten Antivalenzglieds (ex1) als zweithöhere und die Vorzeichenstelle des Ausgangssignals des dritten Verzögerungsglieds (v3) als höchste Stelle ergänzt, und
- dem Ausgang des Vielfachumschalters (vu1) ist ein digitales Differenzierglied (dg) nachgeschaltet.

6. Videorecorder nach Anspruch 2 mit einer Zusatzschaltung für die SECAM-Norm, gekennzeichnet durch folgende Merkmale:
- am Ausgang des ersten Normband-Bandpasses (nb1) liegt ein erstes Digitalfilter (df1), dessen Filtercharakteristik von glockenförmig bei Aufnahmebetrieb (R) auf invers-glockenförmig bei Wiedergabe (P) umschaltbar ist und mit dessen Ausgang ein weiterer digitaler Frequenzdemodulator (fd') verbunden ist,

- diesem ist ein digitaler Frequenzmodulator (fm) nachgeschaltet, dessen Hub von einem ersten Wert bei Aufnahme (R) auf einen zweiten Wert bei Wiedergabe (P) umschaltbar ist und der mittels des Horizontalsynchronimpulses (ss) nur während der Zeiten mit einem Chromasignal wirksam geschaltet ist, und

- diesem ist ein zweites Digitalfilter (df2) nachgeschaltet, dessen Filtercharakteristik von glockenförmig bei Wiedergabe (P) auf invers-glockenförmig bei Aufnahmebetrieb (R) umschaltbar ist und dessen Ausgang nur bei SECAM-Betrieb über die erste Eingangs-Ausgangs-Strecke eines achten elektronischen Umschalters (u8) mit dem Eingang des zweiten Normband-Bandpasses (nb2) verbunden ist, während bei PAL/NTSC-Betrieb dessen zweite Eingangs-Ausgangsstrecke zwischen dem Ausgang des ersten Interpolators (ip1) und dem Eingang des zweiten Normband-Bandpasses (nb2) liegt.

7. Videorecorder nach Anspruch 2 oder 6, gekennzeichnet durch einen ersten Normband-Bandpaß (nb1) mit für die Frequenz (Fc) des Abtastsignals (fc) gültigen Übertragungsfunktion

$$H(z) = \frac{(1 + z^{-1})(1 - z^{-1})(1 + z^{-1})}{(1 + z^{-1})}$$

deren Term $(1 + z^{-6})$ durch eine signalflußmäßig hinter dem Dezimierer (dz) angeordnete Teilschaltung für den bei der Frequenz (F1) des Abtastsignals (f1) des Dezimierers (dz) gültigem Term $(1 + z^{*-2})$ realisiert ist.

8. Videorecorder nach einem der Ansprüche 2, 6 oder 7, gekennzeichnet durch einen Formierbandpaß (fb) mit für die Frequenz (F1) seines Abtastsignals (f1) gültigen Übertragungsfunktion

$$H(z) = (1 - z^{-2})^5 (0{,}375 + z^{-2})(1 + 0{,}375z^{-2}).$$

9. Videorecorder nach einem der Ansprüche 2 oder 6 bis 8, gekennzeichnet durch einen ersten Interpolator (ip1) mit für die Abtastsignalfrequenz (Fc) gültigen Übertragungsfunktion

$$H(z) = \frac{(1 - z^{-1})(1 + z^{-1})(1 + z^{-1})}{(1 + z^{-1})}$$

deren Term $(1 - z^{-2})$ durch einen digitalen Multiplexer (mx) realisiert ist.

10. Videorecorder nach einem der Ansprüche 1 bis 9, gekennzeichnet durch einen digitalen Sinusgenerator (sg1, sg2) mit zugehörigem Multiplizierer (m2, m5; Fig. 2) von mindestens folgendem Aufbau:

- ein j-stelliger digitaler Akkumulator (ak) erhält das erste oder zweite Digitalwort (ds1, ds2) und das Abtastsignal (fc) zugeführt,

- in Richtung niederwertiger Stellen sind, ausgehend von der (j-2)-ten Stelle q Stellen des Ausgangssignals des Akkumulators (ak), wobei q kleiner als oder gleich j-2 ist, jeweils über die einzelnen Inverter eines zweiten Vielfachinverters (vi2) geführt, deren jeweiliger Eingang am jeweiligen ersten Eingang der einzelnen Umschalter eines zweiten Vielfachumschalters (vu2) liegt, während deren jeweiliger zweiter Eingang mit dem jeweiligen Ausgang für die q Stellen verbunden ist und der gemeinsame Steuereingang der einzelnen Umschalter am Ausgang der (j-1)-ten Stelle liegt,

- der Ausgang des zweiten Vielfachumschalters (vu2) ist mit dem Adreßeingang eines die Sinus-Werte des ersten Quadranten enthaltenden weiteren Festwertspeichers (rm') verbunden, dessen Ausgang am ersten Eingang des zweiten oder des fünften Multiplizierers (m2, m5) liegt, und

-mit seinem Ausgang ist jeweils einer der Inverter eines dritten Vielfachinverters (vi3) verbunden, deren jeweilige Eingänge am jeweiligen ersten Eingang der einzelnen Umschalter eines dritten Vielfachumschalters (vu3) liegen, während deren jeweiliger zweiter Eingangg mit dem Ausgang des zweiten oder des fünften Multiplizierers (m2, m5) verbunden ist und der gemeinsame Steuereingang der einzelnen Umschalter am Ausgang der j-ten Stelle liegt sowie der Ausgang des dritten Vielfachumschalters (vu3) am Eingang des ersten 90°-Phasenschiebers (h1) oder des zweiten Addierers (a2) angeschlossen ist.

## Claims

1. Video recorder with a magnetic recording medium in the form of a tape wherein the chroma signaL (cs), after being separated from the demodulated composite color signal (fs), is changed to a carrier signal having a frequency lower than the standard chrominance-subcarrier frequency, wherein the composite video signal (bs) is subjected to a frequency modulation, and wherein the sum of the chroma signal (cs') of reduced carrier frequency and the frequency-modulated composite video signal (bs') is stored on the recording medium by means of a head system (ks), is read from there by means of the head system (ks) during playback (P), and is then transformed back into the composite color signal (fs), and with control circuits (dm) for the motors of the magnetic recording medium and the head system (ks)

characterized br the following features:

- a fast analog-to-digital converter (aw) is connected via a first electronic changeover switch (u1) either to the composite-color-signal input (fse) or to the head system (ks), and is fed with a sampling signal (fc) of fixed frequency for all three color-television standards (PAL, NTSC, SECAM);

- the separation into the chroma signal (cs) and the composite video signal (bs), the digital processing of these signals into a digital chroma signal and a digital composite video signal, the separation of the synchronizing signals from the composite video signal (bs), the digital processing of these synchronizing signals into digital synchronizing signals (ss), and the generation of digital motor control signals (sm) are performed by fast digital circuits (db, dc, dm) handling the signals at least partly in parallel;

- the digital processing of the chroma signal (cs) is performed at a fixed subcarrier frequency (zt) for all three color-television standards which lies near the standard subcarrier frequency and of which the frequency (Fc) of the sampling signal (fc) is an integral multiple;

0 169 930

- the processed digital chroma signal (cs) and the processed digital composite video signal (ls) are fed to first and second digital-to-analog converters (dw1, dw2), respectively, each having its output connected to one input of an analog adder (aa), and

- the output of the analog adder (aa) is coupled either to the composite-color-signal output (fsa) of the video recorder or to the head system (ks) via a second electronic changeover switch (u2).

2. A video recorder as claimed in claim 1 comprising a digital chroma circuit (dc) characterized by the following features:

- a common channel is provided for the record mode (R) and the playback mode (P);

- the fixed frequency of the sampling signal (fc) lies in the range from about 18 to 20 MHz and is preferably 18 MHz;

- the output of the analog-to-digital converter (aw) is coupled to the first inputs of first and second digital multipliers (m1, m2) having their second inputs connected to the cosine output (ca) and the sine output (sa), respectively, of a first frequency-settable and -controllable digital sine-wave generator (sg1);

- the output of the first multiplier (m1) is connected to the first input of a first digital adder (a1) through a first digital delay element (v1) providing a delay equal to that of a first digital 90° phase shifter (h1), and the output of the second multiplier (m2) is connected through the first 90° phase shifter (h1) to the second input of the first digital adder (a1), whose output is coupled to the first input of a third digital multiplier (m3) through a first digital standard-band-pass filter (nb1) and a digital decimator (dz) whose sampling frequency (f1) is a subharmonic, preferably one-third, of the fixed sampling frequency (Fc);

- the output of the third multiplier (m3) is connected to the input of a digital signal-forming band-pass filter (fb) having its output coupled through a digital comb filter (kf) which is bypassed by an electronic switch (es) only during the record mode (P) to the input of a first digital interpolator (ip) clocked by the sampling signal (fc);

- the output of the digital interpolator (ip1) is connected through a second digital standard-band-pass filter (nb2) and a second digital delay element (v2) providing a delay equal to that produced by a second 90° phase shifter (h2) to the first input of a fourth digital multiplier (m4), and through the second standard-band-pass filter (nb2) to the input of the second 90° phase shifter (h2) having its output connected to the first input of a fifth digital multiplier (m5);

- the second inputs of the fourth and fifth multipliers (m4, m5) are connected to the cosine output (ca) and the sine output (sa), respectively, of a second frequency-settable digital sine-wave generator (sg2);

- the outputs of the fourth and fifth multipliers (m4, m5) are each connected to one input of a second digital adder (a2) having its output coupled to the input of the first digital-to-analog converter (dw1);

- the second input of the third multiplier (m3) is connected to the output of a digital automatic color-control stage (ac) whose signal input is connected to the output of the comb filter (kf), and to whose clock input the synchronizing pulses (ss) are applied;

- for the VHS system, a first digital signal (ds1) equal to the difference between one-quarter of the sampling frequency (Fc) and the respective chrominance-subcarrier frequency is applied to the frequency-setting input (fe) of the first sine-wave generator (sg1) in the record mode (R), and a second digital signal (ds2) equal to the sum of one-quarter of the sampling frequency (fc) and 40 times the associated horizontal frequency in the case of the NTSC standard or 40.125 times the associated horizontal frequency in the case of the PAL and SECAM standards in the playback mode (P);

- the phase-control input (fr) of the first sine-wave generator (sg1) is presented with a phase-control signal from a digital phase-control circuit (pr) which compares the digital synchronizing signal (ss) with the signal from a digital horizontal deflection oscillator (ho), and

- the frequency-setting input (fe) of the second sine-wave generator (sg2) is supplied with the second digital signal (ds2) in the record mode (R), and with the first digital signal (ds1) in the playback mode (P).

3. A video recorder as claimed in claim 1 comprising a digital video-signal-processing circuit (db) characterized by the following features:

- a first subchannel (r) is provided for the record mode (R), and a second subchannel (p) for the playback mode (P);

- the fixed frequency of the sampling signal (fc) is about 18 MHz to 20 MHz, preferably 18 MHz;

- in the first subchannel (r), during recording (R),

- the output of the analog-to-digital converter (aw) is connected to a digital low-pass filter (tp) having an upper cutoff frequency of about 3 MHz whose output feeds a digital sync separator stage (ha) and is connected through a digital deemphasis and limiter stage (pb) to the input of a digital voltage-controlled oscillator (vo) serving as a frequency modulator which is fed with a third digital word (ds3) determining its carrier frequency depending on the television standard, and

- the output of the oscillator (vo) is connected to the input of the second digital-to-analog converter (dw2) through a first digital high-pass filter (hp1) having a lower cutoff frequency of about 1.5 MHz, and

- in the second subchannel (p), during playback (P),

- the output of the digital-to-analog converter (aw) is connected through a second digital-high-pass filter (hp2) having a lower cutoff frequency of about 1.5 MHz to the input of a digital frequency detector (fd) having its output coupled to the input of the second digital-to-analog converter (dw2).

4. A video recorder as claimed in claim 3, characterized by the following features:

- the following additional subcircuits are arranged between the output of the frequency detector (fd) and the

11

input of the second digital-to-analog converter (dw2) in the direction of signal flow:
- a decimating digital low-pass filter (dt) having an upper cutoff frequency of about 3 MHz and clocked with a clock signal (f2) of half the sampling frequency (fc/2);
- a digital deemphasis and noise-reduction stage (du);
- the first input-output path of a seventh electronic changeover switch (u7);
- the first input-output portion of a third digital adder (a3), and
- a second digital interpolator (ip2) clocked by the sampling signal (fc);
- the output of the second high-pass filter (hp2) is fed through a dropout detector (dk) to the control input of the seventh changeover switch (u7), which has its output connected to the input of a delay stage (vs) providing a delay equal to one line period, and
- the output of the delay stage (vs) is connected to the second input of the seventh changeover switch (u7) and to the first input of a digital correlator (kl) whose second input is connected to the output of the third adder (a3), and whose output is applied to the second input of the third adder (a3).

5. A video recorder as claimed in claim 3 or 4, characterized by the following construction of the digital frequency detector (fd):
- the input of the digital frequency detector (fd) is connected to the subtrahend input (s) of a subtracter (sd) and to the first signal input of an electronic multiple intermediate switch (kr) through a third delay element (v3), providing the same delay as a third digital 90° phase shifter (h3), and a first digital absolute-value stage (bb1);
- the third 90° phase shifter (h3) is located between the input of the frequency detector (fd) and that of a second digital absolute-value stage (bb2) having its output connected to the minuend input (m) of the subtracter (st) and to the second signal input of the multiple intermediate switch (kr);
- the control input of the multiple intermediate switch (kr) is connected to the sign-signal output (va) of the subtracter (st), and its two signal outputs are connected to the dividend input (dd) and the divisor input (dr), respectively, of a digital divider (d) having its output coupled to the address input of a read-only memory (rm) holding the arc-tangent values of the first half-quadrant;
- the most significant bit of the output signal of the third delay element (v3) and that of the output signal of the third 90° phase shifter (h3) are fed to the first and second inputs, respectively, of a first exclusive-OR element (ex1) whose output is coupled to the first input of a second exclusive-OR element (ex2) having its second input connected to the sign output (va) of the subtracter (st);
- each output of the read-only memory (rm) is followed by one of the inverters of a first multiple inverter (vi1) which have their inputs connected to the first inputs of the individual switches of a first multiple switch (vu1), while the second inputs of these switches are connected to the respective ouputs of these inverters, and the common control input of the switches is connected to the output of the second exclusive-OR element (ex2);
- the bits of the output signal of the multiple switch (vu1) are supplemented on the high-order side by the output of the second exclusive-OR element (ex2) as the next higher-order bit, the output of the first exclusive-OR element (ex1) as the next to the highest-order bit, and the sign bit of the output signal of the third delay element (v3) as the highest-order bit, and
- the output of the multiple switch (vu) is followed by a digital differentiator (dg).

6. A video recorder as claimed in claim 2 comprising an additional circuit for the SECAM standard, characterized by the following features:
- the output of the first standard-band-pass filter (nb1) is followed by a first digital filter (df1) whose characteristic is switchable from bell-shaped in record (R) to inverse bell-shaped in playback (P), and whose output is followed by an additional digital frequency detector (fd');
- the additional digital frequency detector (fd') is followed by a digital frequency modulator (fm) whose frequency deviation is switchable from a first value in record (R) to a second value in playback (P), and which is activated by the horizontal synchronizing pulse (ss) only during the times that a chroma signal is present, and
- the digital frequency modulator (fm) is followed by a second digital filter (df2) whose characteristic is switchable from bell-shaped in playback (P) to inverse bell-shaped in record (R), and whose output is connected via the first input-output path of an eighth electronic changeover switch (u8) to the input of the second standard-band-pass filter (nb2) only in the SECAM mode, while in the PAL/NTSC mode, the second input-output path of the eighth electronic switch (u8) interconnects the output of the first interpolator (ip1) and the input of the second standard-band-pass filter (nb2).

7. A video recorder as claimed in claim 2 or 6, characterized in that the first standard-band-pass filter (nb1) has the following transfer function for the frequency (Fc) of the sampling signal (fc):

$$H(z) = \frac{(1 + z^{-10})(1 - z^{-4})(1 + z^{-4})}{(1 + z^{-2})^3},$$

wherein the term $(1 + z^{-6})$ is realized by a subcircuit following the decimator (dz) and realizing the term $(1 + z^{x-2})$, which is valid at the frequency (F1) of the sampling signal (f1) of the decimator (dz).

8. A video recorder as claimed in claim 2, 6, or 7, characterized in that the signal-forming band-pass filter (fb) has the following transfer function for the frequency (F1) of its sampling signal (f1):

$$H(z) = (1 - z^{-2})^5(0.375 + z^{-2})(1 + 0.375z^{-2}).$$

9. A video recorder as claimed in claim 2 or any one of claims 6 to 8, characterized in that the first interpolator (ip1) has the following transfer function for the sampling frequency (fc):

$$H(z) = \frac{(1 - z^{-2})(1 + z^{-4})(1 + z^{-4})^2}{(1 + z^{-2})^3},$$

wherein the term $(1 - z^{-2})$ is realized with a digital multiplexer (mx).

10. A video recorder as claimed in any one of claims 1 to 9, characterized by the following minimum

**0 169 930**

configuration of the digital sine-wave generator (sg1, sg2) with the associated multipliers (m2, m5; Fig. 2, Fig. 5):
- a j-bit digital accumulator (ak) is supplied with the first or second digital word (ds1, ds2) and the sampling signal (fc);
- of the bits less significant than the (j-2)th bit, q bits of the output signal of the accumulator (ak), where q is smaller than or equal to j-2, are fed through the individual inverters of the second multiple inverter (vi2), whose inputs are connected to the first inputs of the individual switches of a second multiple switch (vu2), while the second inputs of these switches are connected to the respective outputs of the individual inverters, and the common control input of the switches is connected to the accumulator output for the (j-1)th bit;
- the output of the second multiple switch (vu2) is connected to the address input of an additional read-only memory (rm') holding the sine values of the first quadrant and having its output coupled to the first input of the second or fifth multiplier (m2, m5), and
- the outputs of the second or fifth multiplier (m2, m5) are each connected to one of the inverters of a third multiple inverter (vi3) having their inputs connected to the first inputs of the individual switches of a third multiple switch (vu3), while the second inputs of these switches are connected to the output of these inverters, and the common control input of the switches is connected to the accumulator output for the jth bit, while the output of the third multiple switch (vu3) is coupled to the input of the first 90° phase shifter (h1) or the second adder (a2).

**Revendications**

1. Enregistreur vidéo à support d'enregistrement magnétique en forme de bande, dans lequel le signal de chrominance (cs), après avoir été extrait du signal composite couleur démodulé (fs), est changé en un signal porteur ayant une fréquence inférieure à la fréquence de la sous-portouse de chrominance normalisée, dans lequel le signal vidéo composite (bs) est soumis à une modulation de fréquence et dans lequel la somme du signal de chrominance de fréquence porteuse réduite (cs') et du signal vidéo composite à modulation de fréquence (bs') est enregistrée sur le support d'enregistrement au moyen d'un système de têtes (ks), est lue sur ce support au moyen du système de têtes lors de la lecture (P) et est ensuite retransformée en signal composite couleur (fs), des circuits de commande (dm) étant prévus pour les moteurs du support d'enregistrement magnétique et du système de têtes (ks),
<u>caractérisé en ce que:</u>
- un convertisseur analogique-numérique rapide (aw) est connecté, par l'intermédiaire d'un premier inverseur électronique (u1), soit à l'entrée de signal couleur composite (fse), soit aux système de têtes (ks), et il reçoit un signal d'échantillonnage (fc) de fréquence fixe pour les trois normes de télévision couleur (PAL, NTSC, SECAM):
- la séparation en signal de chrominance (cs) et signal vidéo composite (bs), la conversion numérique de ces signaux en un signal de chrominance numérique et un signal vidéo composite numérique, l'extraction des signaux de synchronisation du signal vidéo composite (bs), la conversion numérique de ces signaux de synchronisation en signaux de synchronisation numériques (ss) et la production des signaux numériques de commande des moteurs (sm) sont effectués par des circuits numériques rapides (db, dc, dm) traitant les signaux en parallèle, au moins en partie:
- le traitement numérique du signal de chrominance (cs) est effectué à une fréquence de sous-porteuse fixe (zt) pour les trois normes de télévision couleur, qui est proche de la fréquence de la sous-porteuse des normes et dont la fréquence (Fc) du signal d'échantillonnage (fc) est un multiple entier:
- le signal de chrominance numérique traité (cs) et le signal vidéo composite numérique traité (1s) sont fournis respectivement à des premier et deuxième convertisseurs numérique-analogique (dw1, dw2), la sortie de chacun étant connectée à une entrée d'un additionneur analogique (aa) et
- la sortie de l'additionneur analogique (aa) est couplée soit à la sortie de signal couleur composite (fsa) de l'enregistreur vidéo, soit au système de têtes (ks) par un deuxième inverseur électronique (u2).

2. Enregistreur vidéo conforme à la revendication 1, comprenant un circuit de chrominance numérique caractérisé en ce que:
- un canal commun est prévu pour le mode d'enregistrement (R) et le mode de lecture (P);
- la fréquence fixe du signal d'échantillonnage (fc) se situe dans la plage de 18 à 20 MHz et est de préférence de 18 MHz;
- la sortie du convertisseur analogique-numérique (aw) est couplée aux premières entrées d'un premier et d'un deuxième multiplicateur numérique (m1, m2) dont les deuxièmes entrées sont respectivement connectées aux sorties de cosinus (ca) et de sinus (sa) d'un générateur d'onde sinusoïdale ajustable et réglable en fréquence;
- la sortie du premier multiplicateur (m1) est connectée à la première entrée d'un premier additionneur numérique (a1) par l'intermédiaire d'un premier élément à retard numérique (v1) fournissant un retard égal à celui d'un premier déphaseur numérique à 90° (h1) et la sortie du deuxième multiplicateur (m2) est connectée par l'intermédiaire du premier déphaseur à 90° (h1) à la deuxième entrée du premier additionneur numérique (a1) dont la sortie est couplée à la première entrée d'un troisième multiplicateur numérique (m3) par

13

l'intermédiaire d'un premier filtre passe-bande numérique de norme (nb1) et d'un décimateur numérique (dz) dont la fréquence d'échantillonnage (f1) est un sous-multiple, de préférence un tiers, de la fréquence d'échantillonnage fixe (Fc);

- la sortie du troisième multiplicateur (m3) est connectée à l'entrée d'un filtre passe-bande numérique de formation de signal (fb) dont la sortie est couplée, à travers un filtre numérique (kf), qui est court-circuité par un commutateur électronique (es) pendant le mode de lecture (P) seulement, à l'entrée d'un premier interpolateur numérique (ip1) cadencé par le signal d'échantillonnage (fc);

- la sortie de cet interpolateur numérique (ip1) est connectée, par l'intermédiaire d'un deuxième filtre passe-bande numérique de norme (nb2), suivi d'un deuxième élément à retard numérique (v2) fournissant un retard égal à celui d'un deuxième déphaseur à 90° (h2), à la première entrée d'un quatrième multiplicateur numérique (m4) et, par l'intermédiaire du deuxième filtre passe-bande de norme (nb2) à l'entrée du deuxième déphaseur à 90° (h2) dont la sortie est connectée à la première entrée d'un cinquième multiplicateur numérique (m5);

- les deuxièmes entrées des quatrième et cinquième multiplicateurs numériques (m4, m5) sont respectivement connectées aux sorties de cosinus (ca) et de sinus (sa) d'un deuxième générateur d'onde sinusoïdale numérique à fréquence réglage (sg2);

- les sorties des quatrième et cinquième multiplicateurs (m4, m5) sont chacune connectées à une entrée d'un deuxième additionneur numérique (a2) dont la sortie est couplée à l'entrée du premier convertisseur numérique-analogique (dw1);

- la deuxième entrée du troisième multiplicateur (m3) est connectée à la sortie d'un étage de commande automatique de couleur (ac) dont l'entrée de signal est connectée à la sortie du filtre en peigne (kf) et à l'entrée d'horloge duquel sont appliquées les impulsions de synchronisation (ss);

- pour le système VHS, il est appliqué à l'entrée de réglage de fréquence (fe) du premier générateur d'onde sinusoïdale (sg1), dans le mode d'enregistrement (R), un premier signal numérique (ds1) égal à la différence entre un quart de la fréquence d'échantillonnage (Fc) et la fréquence de la sous-porteuse de chrominance respective et, dans le mode de lecture (P), un deuxième signal d'échantillonnage (ds2) égal à la somme d'un quart de la fréquence d'échantillonnage (Fc) et de 40 fois la fréquence de balayage horizontal associée, dans le cas de la norme NTSC, ou de 40,125 fois la fréquence de balayage associée, dans le cas des normes PAL et SECAM;

- l'entrée de commande de phase (fr) du premier générateur d'onde sinusoïdale (sg1) reçoit un signal de commande de phase d'un circuit numérique de commande de phase (pr) qui compare le signal de synchronisation numérique (ss) avec le signal d'un oscillateur de déviation horizontale numérique (ho), et

- l'entrée de réglage de fréquence (fe) du deuxième générateur d'onde sinusoïdale (sg2) reçoit le deuxième signal numérique (ds2) dans le mode d'enregistrement (R) et le premier signal numérique (ds1), dans le mode de lecture (P).

3. Enregistreur vidéo conforme à la revendication 1, comprenant un circuit numérique de traitement du signal vidéo (db) caractérisé en ce que;

- un premier sous-canal (r) est prévu pour le mode d'enregistrement (R), un deuxième sous-canal (p) étant prévu pour le mode de lecture (P);

- la fréquence fixe du signal d'échantillonnage (fc) est d'environ 18 à 20 MHz, de préférence 18 MHz;

- dans le premier sous-canal (r), au cours d'un enregistrement (R),

- la sortie du convertisseur analogique-numérique (aw) est connectée à un filtre numérique passe-bas (tp) dont la fréquence de coupure supérieure est d'environ 3 MHz et dont la sortie est couplée à un étage séparateur de synchronisation numérique (ha) et est connectée, par l'intermédiaire d'un étage numérique de désaccentuation et de limitation (pb) à l'entrée d'un oscillateur numérique à commande par la tension (vo) servant de modulateur de fréquence et auquel est appliqué un troisième mot numérique (ds3) déterminant sa fréquence porteuse selon la norme de télévision, et

- la sortie de l'oscillateur (vo) est connectée à l'entrée d'un deuxième convertisseur numérique-analogique (dw2), par l'intermédiaire d'un premier filtre passe-haut numérique (hp1) ayant une fréquence de coupure inférieure d'environ 1,5 MHz, et

- dans le deuxième sous-canal (p), au cours d'une lecture (P),

- la sortie du convertisseur analogique-numérique (aw) est connectée, par l'intermédiaire d'un deuxième filtre passe-haut numérique (hp2) dont la fréquence de coupure inférieure est d'environ 1,5 MHz, à l'entrée d'un démodulateur de fréquence numérique (fd) dont la sortie est couplée à l'entrée du deuxième convertisseur numérique-analogique (dw2).

4. Enregistreur vidéo conforme à la revendication 3, caractérisé en ce que:

- les éléments de circuits additionnels ci-après sont disposés entre la sortie du détecteur de fréquence (fd) et l'entrée du deuxième convertirseur numérique-analogique (dw2), dans le sens de cheminement du signal:

- un filtre passe-bas numérique de décimation (dt) ayant une fréquence de coupure supérieure d'environ 3 MHz, et cadencé par un signal d'horloge (f2) dont la fréquence est la moitié de la fréquence d'échantillonnage (fc/2);

- un étage numérique de désaccentuation et de réduction de bruit (du);

- le premier trajet entrée-sortie d'un septième commutateur inverseur électronique (u7);

- la première partie entrée-sortie d'un troisième additionneur numérique (a3), et

- un deuxième interpolateur numérique (ip2) cadencé par le signal d'échantillonnage (fc);

- la sortie du deuxième filtre passe-haut (hp2) est couplée, par l'intermédiaire d'un détecteur d'interruption (dk), à l'entrée de commande du septième commutateur inverseur (u7), dont la sortie est connectée à l'entrée d'un étage à retard (vs) fournissant un retard égal à une période de ligne, et

- la sortie de l'étage à retard (vs) est connectée à la deuxième entrée du septième commutateur inverseur (u7) et à la première entrée d'un corrélateur numérique (k1) dont la deuxième entrée est connectée à la sortie du troisième additionneur (a3), sa sortie étant connectée à la deuxième entrée du troisième additionneur (a3).

5. Enregistreur vidéo conforme à la revendication 3 ou 4, caractérisé en ce que le détecteur de fréquence numérique (fd) est agencé de manière que:

- son entrée est connectée à l'entrée de terme à soustraire (s) d'un soustracteur (st) et à la première entrée de signal d'un commmutateur permutateur multiple électronique (kr) par l'intermédiaire d'un troisième élément à retard (v3) fournissant le même retard qu'un troisième déphaseur numérique à 90° (h3), suivi d'un premier étage numérique de valeur absolue (bb1);

- le troisième déphaseur à 90° (h3) est disposé entre l'entrée du détecteur de fréquence (fd) et celle d'un deuxième étage numérique de valeur absolue (bb2) dont la sortie est connectée à l'entrée de terme principal (m) du soustracteur (st) et à la deuxième entrée de signal du commutateur permutateur multiple (kr);

- l'entrée de commande du commutateur permutateur multiple (kr) est connectée à la sortie de signal de signe (va) du soustracteur (st), et ses deux sorties de signaux sont respectivement connectées à l'entrée de dividende (dd) et à l'entrée de diviseur (dr) d'un diviseur numérique (d) dont la sortie est couplée à l'entrée d'adresse d'une mémoire morte (rm) contenant les valeurs d'arc tangente du premier demi-quadrant;

- le bit de plus significatif du signal de sortie du troisième élément à retard (v3) et celui du signal de sortie du troisième déphaseur à 90° (h3) sont respectivement fournis à la première et à la deuxième entrée d'un premier élément OU-exclusif (ex1) dont la sortie est couplée à la première entrée d'un deuxième élément OU-exclusif (ex2) dont la deuxième entrée est connectée à la sortie de signe (va) du soustracteur (st);

- chaque sortie de la mémoire morte (rm) est suivie par l'un des inverseurs d'un inverseur multiple (vi1) qui ont leurs entrées connectées aux premières entrées de commutateurs individuels d'un premier commutateur multiple (vu1), alors que les deuxièmes entrées de ces commutateurs sont connectées aux sorties respectives de ces inverseurs, l'entrée de commande commune de ces commutateurs étant connectée à la sortie du deuxième élément OU-exclusif (ex2);

- les bits du signal de sortie du commutateur multiple (vu1) sont complétés, du côté des rangs élevés, par la sortie du deuxième élément OU-excluisif (ex2) fournissant le bit de rang immédiatement supérieur, la sortie du premier élément OU-exclusif (ex1) fournissant le bit de rang suivant celui-ci et le bit de signe du signal de sortie du troisième élément à retard (v3) fournissant le bit de rang le plus élevé;

- la sortie du commutateur multiple (vu1) est suivie par un différentiateur numérique (dg).

6. Enregistreur vidéo conforme à la revendication 2, comprenant un circuit additionnel pour la norme SECAM, caractérisé par les dispositions suivantes:

- la sortie du premier filtre passe-bande de norme (nb1) est connectée à un premier filtre numérique (df1) dont la réponse est commutable entre une courbe en cloche pour l'enregistrement (R) et une courbe en anti-cloche pour la lecture (P) et dont la sortie est suivie par un détecteur de fréquence numérique additionnel (fd');

- le détecteur de fréquence numérique additionnel (fd') est suivi par un modulateur de fréquence numérique (fm) dont l'excursion de fréquence est commutable entre une première valeur en enregistrement (R) et une deuxième valeur en lecture (P) et qui n'est activé par les impulsions de synchronisation horizontale (ss) que durant les périodes où un signal de couleur est présent, et

- le modulateur de fréquence numérique (fm) est suivi par un deuxième filtre numérique dont la réponse est commutable d'une courbe en cloche en lecture (P) à une courbe en anti-cloche en enregistrement (R) et dont la sortie est connectée, par l'intermédiaire du premier trajet entrée-sortie d'un huitième commutateur inverseur électronique (u8), à l'entrée du deuxième filtre passe-bande de norme (nb2), dans le mode SECAM seulement, tandis que, dans le mode PAL/NTSC, le deuxième trajet entrée-sortie du huitième commutateur inverseur électronique (u8) interconnecte la sortie du premier interpolateur (ip1) et l'entrée du deuxième filtre passe-bande de norme (nb2).

7. Enregistreur vidéo conforme à la revendication 2 ou 6, caractérisé en ce que le premier filtre passe-bande de norme (nb1) a la fonction de transfert suivante, pour un signal d'échantillonnage (fc) ayant la fréquence (Fc):

$$H(z) = \frac{(1 + z^{16})(1 - z^4)(1 + z^4)}{(1 + z^2)^2},$$

dans laquelle le terme $(1 + z^{-6})$ est obtenu par un élément de circuits suivant le décimateur (dz) et réalisant l'expression $(1 + z^{*-2})$ pour la fréquence (F1) du signal d'échantillonnage (f1) du décimateur (dz).

8. Enregistreur vidéo conforme à la revendication 2, 6 ou 7, caractérisé en ce que le filtre passe-bande de formation de signal (fb) a la fonction de transfert suivante, pour un signal d'échantillonnage (f1) ayant une fréquence (F1):

$$H(z) = (1 - z^{-2})^5 (0,375 + z^{-2}) (1 + 0,375 z^{-2}).$$

9. Enregistreur vidéo conforme à la revendication ou à l'une des revendications 6 à 8, caractérisé en ce que le premier interpolateur (ip1) a la fonction de transfert suivante, pour la fréquence d'échantillonnage (Fc):

$$H(z) = \frac{(1 - z^4)(1 + z^2)(1 + z^4)^2}{(1 + z^2)^2},$$

dans laquelle le terme $(1 - z^{-2})$ est obtenu à l'aide d'un multiplexeur numérique (mx).

10. Enregistreur vidéo conforme à l'une quelconque des revendications 1 à 9, caractérisé en ce que, pour le générateur numérique d'onde sinusoïdale (sg1, sg2) et les multiplicateurs associés (m2, m5; fig. 2, fig. 5), il comprend au moins:

15

- un accumulateur numérique (ak) à j bits reçoit le premier et le deuxième mot numérique (ds1, ds2) et le signal d'échantillonnage (fc);

- à partir du bit de rang (j - 2) et vers les bits moins significatifs, q bits du signal de sortie de l'accumulateur (ak), q étant inférieur ou égal à j - 2, sont transmis par l'intermédiaire des inverseurs individuels du deuxième inverseur multiple (vi2) dont les entrées sont chacune connectées à une des premières entrées des commutateurs individuels d'un deuxième commutateur multiple (vu2), tandis que chacune des deuxièmes entrées de ces commutateurs est connectée à une sortie respective des inverseurs individuels, l'entrée de commande commune des commutateurs étant connectée à la sortie de l'accumulateur pour le bit j - 1;

- la sortie du deuxième commutateur multiple (vu2) est connectée à l'entrée d'adresse d'une mémoire morte additionnelle (rm') contenant les valeurs de sinus du premier quadrant et dont la sortie est couplée à la première entrée du deuxième ou du cinquième multiplicateur (m2, m5), et

- chaque sortie du deuxième ou du cinquième multiplicateur (m2, m5) est connectée à l'un des inverseurs d'un troisième inverseur multiple (vi3) dont chaque entrée est connectée à une première entrée d'un commutateur individuel du troisième commutateur multiple (vu3), tandis que les deuxièmes entrées de ces commutateurs sont chacune connectées à une sortie du deuxième ou cinquième multiplicateur (m2, m5), l'entrée de commande commune des commutateurs étant connectée à la sortie du bit de rang j de l'accumulateur, tandis que la sortie du troisième commutateur multiple (vu3) est couplée à l'entrée du premier déphaseur à 90° (h1) ou du deuxième additionneur (a2).

FIG.1

0 169 930

FIG. 2

0 169 930

FIG. 3

FIG. 4

FIG. 5

$$H(z) = \frac{(1+z^{-10})(1-z^{-8})(1+z^{-6})}{(1+z^{-2})^3}$$

$\longrightarrow$ 18 MHz $\Big|$ 6 MHz $\longrightarrow$

(Fc) $\Big|$ (Fc/3)

FIG.6

$$H(z) = (1 - z^{-2})^5 (0,375 + z^{-2})(1 + 0,375 z^{-2})$$

FIG. 7

0 169 930

$$H(z) = \frac{(1-z^{-2})(1+z^{-4})(1+z^{-6})^2}{(1+z^{-2})^2}$$

FIG. 8

0 169 930

FIG.9